# EUROPÄISCHE PATENTANMELDUNG

(11) **EP 4 169 851 A1**
(43) Veröffentlichungstag der Anmeldung: **26.04.2023**
(21) Anmeldenummer: 21203428.4
(22) Anmeldetag: 19.10.2021
(51) Int. Cl.: B65D 88/30, B65D 77/04, B65G 65/46, F04C 15/00

(54) **BEHÄLTERSYSTEM, SCHUTZSCHIRM, BEHÄLTER UND FÖRDERSYSTEM**

(71) Anmelder: DAW SE, 64372 Ober-Ramstadt (DE)
(72) Erfinder: KLÜGLING, Stefan, 15732 Schulzendorf (DE); STEINDORF, Sven, 12529 Schönefeld (DE)
(74) Vertreter: Metten, Karl-Heinz

(57) **Zusammenfassung**

Ein Behältersystem (1) für ein rieselfähiges, insbesondere pulverförmiges, Füllgut, wie ein Trockenmörtel für eine Klebe- und/oder Armierungsmasse, umfasst einen, insbesondere füllgutdichten, Innenbehälter (3), der zum Aufnehmen des Füllguts ausgelegt und eingerichtet ist; und eine Sockelanordnung (5) mit einer konkaven, nach oben offenen Stützaufnahme (51), die zum Tragen des Innenbehälters (3) ausgelegt und eingerichtet ist, wobei in einem unteren Bereich, insbesondere am unteren Ende (53), der Stützaufnahme (51) eine Öffnung (55) angeordnet ist, mindestens einen ersten Aufsatz (7), der, insbesondere lösbar, auf die Sockelanordnung (5) aufgesetzt oder aufsetzbar ist und einen Innenraum (71) aufweist, in den der Innenbehälter (3) eingesetzt oder einsetzbar ist.

## Beschreibung

Die Erfindung betrifft ein Behältersystem für ein rieselfähiges, insbesondere pulverförmiges, Füllgut, wie ein Trockenmörtel für eine Klebe- und/oder Armierungsmasse. Die Erfindung betrifft auch einen Schutzschirm für einen Behälter für ein rieselfähiges Füllgut, einen solchen Behälter und ein Fördersystem für das rieselfähige Füllgut.

Aufgrund des wachsenden Kostendrucks im Bausektor ist es wünschenswert, dass rieselfähige Medien, beispielsweise als Grundlage für verarbeitungsfertig aufbereiteten Putz, Gips oder andere Klebe- und/oder Armierungsmassen kostengünstig und dem Bedarf angepasst auf der Baustelle zur Verfügung gestellt wird. Ein kostentreibender Faktor ist die Logistik zur Bereitstellung von Baumaterialien und Hilfsmitteln, sowie zu deren Entsorgung oder Recycling.

Eine Möglichkeit zur Bereitstellung von rieselfähigen oder pastösen Baumaterialien besteht darin, das vorbereitete Medium in einem Metallsilo an der Baustelle zur Verfügung zu stellen. Konventionelle Metallsilos mit einer Füllkapazität von 2 m³ bis 3 m³ für bis zu etwa 3 t Baumaterial haben ein Eigengewicht von etwa 1 t und eine Höhe von mehreren Metern. Problematisch sind die damit verbundenen hohen Transportkosten. Ferner müssen die Metallsilos nach ihrer Verwendung aufwendig gereinigt werden. Außerdem verlangen die aus Metall gefertigten Silos eine kostenaufwändige Konstruktion, sodass viel Kapital an der Baustelle gebunden ist. Oftmals entspricht die Füllmenge eines Silos nicht dem tatsächlichen Bedarf, was unerwünschten Materialausschuss oder zusätzliche erhebliche Logistickosten für weitere Silos zur Folge hat, oftmals sogar beides.

Ein Ansatz zur Kosteneinsparung besteht in der Verwendung sogenannter Einwegcontainer. Die Einwegcontainer können bereits mit einem pastösen Baumaterial befüllt sein oder mit einem rieselfähigen Baumaterial. Das Baumaterial kann mithilfe einer Pump- und Mischvorrichtung an der Baustelle bedarfsgerecht bereitgestellt und dabei gegebenenfalls mit Flüssigkeit versetzt werden. Einwegcontainer sind beispielsweise bekannt aus DE 20 2014 010 034 U1, EP 3 095 752 B2 und EP 2 407 396 A2. Pump- und Mischvorrichtungen werden in EP 1445 490 B1 und EP 1 688 176 B1 beschrieben. Die Einwegcontainer wie auch die Pump- und Mischvorrichtungen erfreuen sich aufgrund ihrer mannigfaltigen Vorteile gegenüber konventionellen Metallsilos großer Beliebtheit. Es besteht jedoch der Wunsch nach weitergehenden Kostenersparnissen. Auch unter ökologischen Gesichtspunkten besteht ein weiterer Wunsch danach, die Menge zu entsorgender Baumaterialien und Hilfsmittel wie auch den CO2-Fußabdruck insbesondere durch Leerfahrten oder Fahrten, die lediglich dem Transport von Hilfsmitteln, wie schweren Metallsilos, dienen, zu minimieren.

Es ist eine Aufgabe der Erfindung, die Nachteile des Stands der Technik zu überwinden, insbesondere kostengünstige Hilfsmittel zur Bereitstellung von insbesondere rieselfähigen Baumaterialien bereitzustellen, insbesondere in Bezug auf Montage- und Verwendungsaufwand, Herstellkosten, Transport- und andere Logistikkosten, Reinigungs- und/oder Recyclingkosten, und/oder Baumaterialkosten, wie Ausschusskosten.

Diese Aufgabe wird durch die Gegenstände der unabhängigen Patentansprüche gelöst.

Gemäß einem ersten Aspekt der Erfindung ist ein Behältersystem für einen rieselfähiges, insbesondere pulverförmiges, Füllgut, wie ein Trockenmörtel für eine Klebe- und/oder Armierungsmasse vorgesehen. Als Komponenten umfasst das Behältersystem einen Innenbehälter, eine Sockelanordnung und mindestens einen lösbaren Aufsatz, insbesondere mehrere vorzugsweise lösbare Aufsätze. Die Komponenten des Behältersystem sind insbesondere derart auf einander abgestimmt, dass der Innenbehälter von der Sockelanordnung tragbar oder getragen und in dem Aufsatz aufnehmbar oder aufgenommen ist. Insbesondere sind die Sockelanordnung, der erste Aufsatz, ein eventueller zweiter Aufsatz sowie gegebenenfalls weitere Aufsätze, mit je wenigstens einer Öffnungsweite ausgestaltet, die wesentlich größer ist als einzelne Füllgut-Einheiten. Vorzugsweise umfasst der erste Aufsatz und/oder der zweite Aufsatz zahlreiche füllgutdurchlässige Öffnungen. Die Sockelanordnung, der erste Aufsatz, der optionale zweite Aufsatz sowie gegebenenfalls weitere Aufsätze sind vorzugsweise füllgutdurchlässig.

Das erfindungsgemäße Behältersystem umfasst einen Innenbehälter, der zum Aufnehmen des Füllguts ausgelegt und eingerichtet ist. Der Innenbehälter kann insbesondere füllgutdicht sein. Optional ist der Innenbehälter ausgelegt und eingerichtet um ein pastöses oder flüssiges Füllgut auszunehmen. Vorzugsweise weist der Innenbehälter eine Füllkapazität von wenigstens 1 m³, insbesondere wenigstens 2 m³, auf. Der Innenbehälter kann beispielsweise aus einem Kunststoffmaterial, vorzugsweise einem formstabilen Kunststoffmaterial, wie Polyethylen, vorzugsweise HDPE, gebildet sein. Es kann bevorzugt sein, dass ein Kunststoffmaterial des Innenbehälters UV-beständig ausgeführt ist. Der Innenbehälter kann in einer beliebigen Farbe, beispielsweise entsprechend der Farbe oder Farben eines Bauunternehmens, ausgeführt sein.

Das Behältersystem umfasst ferner eine Sockelanordnung mit einer konkaven, nach oben offenen Stützaufnahme, die zum Tragen des Innenbehälters ausgelegt und eingerichtet ist. In einem unteren Bereich der Stützaufnahme ist eine Öffnung angeordnet. Die Öffnung ist insbesondere am unteren Ende der Stützaufnahme angeordnet. Die Öffnung in der Sockelanordnung ist vorzugsweise dazu ausgelegt und eingerichtet, das Abgeben von Füllgut aus dem Innenbehälter insbesondere ungehindert zuzulassen. Insbesondere ist die Stützaufnahme derart konkav gestaltet, dass das rieselfähige Füllgut aus dem Bereich des Aufnahmeraums des Innenbehälters entlang der Stützaufnahme abwärts rieselbar ist. Die konkave Stützaufnahme kann sich beispielsweise trichterförmig nach unten verjüngen und einen Neigungswinkel in Bezug auf eine Horizontale aufweisen, der im Bereich von wenigstens 30° bis höchstens 80°, insbesondere im Bereich von wenigstens 45° bis höchstens 70°, bevorzugt bei etwa 60°, liegt. Es kann bevorzugt sein, dass die Stützaufnahme derart gestaltet ist, dass sie das Gewicht des Innenbehälters zuzüglich einem Füllgewicht im Innenbehälter aufgenommenen Füllgut von wenigstens bis zu etwa 1,7 t, vorzugsweise wenigstens bis zu etwa 3 t, insbesondere im Wesentlichen verformungsfrei, trägt. Insbesondere ist die Sockelanordnung dazu ausgestaltet, den Innenbehälter und einen Aufsatz oder mehrere Aufsätze sowie gegebenenfalls das in dem Innenbehälter aufgenommenen Füllgut, insbesondere verformungsfrei, zu tragen.

Das Behältersystem umfasst mindestens einen ersten Aufsatz, der auf die Sockelanordnung aufgesetzt oder aufsetzbar ist und einen Innenraum aufweist, in den der Innenbehälter eingesetzt oder einsetzbar ist. Insbesondere ist der erste Aufsatz, vorzugsweise werkzeugfrei, lösbar auf die Sockelanordnung aufgesetzt oder aufsetzbar. Optional umfasst das Behältersystem mindestens einen zweiten Aufsatz, der auf den ersten Aufsatz aufgesetzt oder aufsetzbar ist und einen zweiten Innenraum aufweist, in den der Innenbehälter einsetzbar oder eingesetzt ist. Insbesondere ist der zweite Aufsatz, vorzugsweise werkzeugfrei, lösbar auf den ersten Aufsatz aufgesetzt oder aufsetzbar. Insbesondere kann der zweite Aufsatz derart auf die Sockelanordnung abgestimmt sein, dass der zweite Aufsatz, insbesondere lösbar, auf die Sockelanordnung aufsetzbar ist. Vorzugsweise ist der erste Aufsatz und/oder der zweite Aufsatz käfigartig. Der erste Aufsatz und/oder der zweite Aufsatz kann eine kasten- und/oder rahmenartige Struktur bilden, die insbesondere in Vertikalrichtung durchlässig ist und/oder sich aus Seitenwandabschnitten zusammensetzt, insbesondere daraus besteht. Insbesondere weisen der erste Aufsatz und der zweite Aufsatz in Horizontalrichtung und/oder Vertikalrichtung gleiche Abmessungen auf.

Vorzugsweise ist es für den bestimmungsgemäßen Gebrauch des Behältersystems vorgesehen, dass die Behältersystem-Komponenten, nämlich der Innenbehälter, die Sockelanordnung und der eine Aufsatz oder die mehreren die mehreren Aufsätze voneinander, insbesondere zerstörungsfrei, trennbar sind. Dadurch kann gewährleistet werden, dass die einzelnen Komponenten des Behältersystems einzelnen gehandhabt, transportiert, gewartet, repariert, gereinigt und/oder ausgetauscht werden können. Das Behältersystem kann einen Montagezustand aufweisen, in dem der zweite Aufsatz auf dem ersten Aufsatz und der erste Aufsatz auf der Sockelanordnung angeordnet, insbesondere aufgesteckt und/oder befestigt ist, und einen Transportzustand, in dem die Behältersystem-Komponenten (Sockelanordnung, Innenbehälter und ein oder mehrere Aufsätze) voneinander gelöst und/oder vereinzelt sind. Vorzugsweise ist der Innenbehälter in dem Montagezustand mit Füllgut beschickt.

Das erfindungsgemäße Behältersystem ist besonders einfach und damit kostengünstig transportfähig. Das Behältersystem kann bedarfsgerecht an die Gegebenheiten bei einer Baustelle anpasst bar sein. Beispielsweise können verschiedene Aufsätze und/oder Innenbehälter kombinierbar gestaltet sein, und/oder Menge an Füllgut, welche in dem Behältersystem vorgehalten ist, kann bedarfsgerecht angepasst sein. Beispielsweise kann Füllgut aus Säcken oder einem Big Bag in einer gewünschten, bedarfsgerechten Menge in das Behältersystem an der Baustelle eingefüllt werden. Der modulare Aufbau erlaubt eine gewichtssparende Gestaltung, insbesondere im Vergleich zu konventionellen Silos, die eine sehr viel einfachere Handhabung gestattet und geringere Transportkosten verursacht. Ebenso können dank des modularen Aufbaus sehr einfach und damit kostengünstig Wartungs-, Reparatur- und/oder Reinigungsarbeiten vorgenommen werden. Dank des modularen Aufbaus können ferner die Behältersystem-Komponenten einzeln hergestellt und transportiert werden, wodurch sich der erforderliche Aufwand reduzieren lässt. Unpassende, beschädigte oder stark verschmutzte Komponenten können auf der Baustelle ohne großen Aufwand einzeln ausgetauscht werden.

Gemäß einer bevorzugten Ausführungsform weist der erste Aufsatz, der zweite Aufsatz und/oder die Sockelanordnung ein Gitter- und/oder Fachwerkgerüst auf. Insbesondere sind die Gitter- und/oder Fachwerk-Öffnungen füllgutdurchlässig. Insbesondere umfasst das Gitter- und/oder Fachwerkgerüst Kunststoff und/oder Metall, wie Aluminium oder Stahl, oder besteht daraus. Auf diese Weise kann ein Behältersystem bereitgestellt werden, dass nicht mehr als 600 kg, insbesondere nicht mehr als 450 kg, vorzugsweise nicht mehr als 300 kg wiegt, wobei des Behältersystem insbesondere eine Füllgutkapazität von wenigstens 1 t, insbesondere wenigstens 1,5 t, vorzugsweise wenigstens 2 t, besonders bevorzugt wenigstens 3 t aufweist. Das gemeinsame Gewicht der Sockelanordnung mit dem ersten Aufsatz hat insbesondere ein Gewicht im Bereich 100 kg bis 400 kg, vorzugsweise etwa 200 kg. Der zweite Aufsatz hat insbesondere ein Gewicht im Bereich 50 kg bis 200 kg, vorzugsweise etwa 100 kg. Eine Gitterstruktur kann beispielsweise durch miteinander verbundene, beispielsweise verschraubte oder verschweißte, vertikale Säulen und horizontale Balken gebildet sein. Eine Fachwerkstruktur kann ferner schräge, insbesondere diagonale, Streben umfassen. Es kann bevorzugt sein, dass der erste Aufsatz und/oder der zweite Aufsatz eine rahmenförmige Gitter- und/oder Fachwerkstruktur ist, die dazu ausgelegt und eingerichtet ist, den Innenbehälter außenumfänglich einzuhausen. Die Ausgestaltung einer oder mehrerer Komponenten des Behältersystems als Gitter- oder Fachwerkstruktur erlaubt es, eine hohe strukturelle Festigkeit mit großen Gewichtsersparnissen zu kombinieren.

Gemäß einer weiteren Ausführungsform umfasst das Behältersystem wenigstens einen Steckadapter zum lösbaren Befestigen des ersten Aufsatzes an der Sockelanordnung und/oder zum lösbaren Befestigen des zweiten Aufsatzes am ersten Aufsatz. Insbesondere ist der wenigstens eine Steckadapter formkomplementär zu einem korrespondierenden Steckabschnitt der Sockelanordnung und/oder des ersten Aufsatzes gebildet. Insbesondere umfassen der Steckadapter und der dazu korrespondierende Steckabschnitt eine Riegelaufnahme zum Aufnehmen eines Befestigungsriegels. Der Befestigungsriegel kann beispielsweise als Stift, Bolzen oder als Schraube gestaltet sein und kann optional eine Sicherung, wie eine Mutter, einen Sicherungssplint und/oder einen Sicherungsbügel umfassen. Beispielsweise kann der erste Aufsatz und/oder der zweite Aufsatz mehrere, insbesondere vier, Standfüße aufweisen, die zumindest teilweise als Steckadapter oder mit einem Steckadapter gebildet sind, die vom abgestimmt zu einem korrespondierenden Steckabschnitt an der Oberseite der Sockelanordnung beziehungsweise des ersten Aufsatzes geformt sind.

Bei einer anderen Ausführungsform eines Behältersystems, die mit den vorigen kombinierbar ist, hat die Sockelanordnung eine Sockelhöhe im Bereich von 50 cm bis 150 cm, insbesondere 80 cm bis 110 cm, vorzugsweise 95 cm. Alternativ oder zusätzlich hat der erste Aufsatz eine erste Aufsatzhöhe im Bereich 50 cm bis 150 cm, insbesondere 80 cm bis 110 cm, vorzugsweise 90 cm. Alternativ oder zusätzlich hat der zweite Aufsatz eine zweite Aufsatzhöhe im Bereich 50 cm bis 110 cm, insbesondere 60 dem der bis 90 cm, vorzugsweise 70 cm. Gemäß einer Weiterbildung des Behältersystems ist die erste Aufsatzhöhe wenigstens so groß wie die zweite Aufsatzhöhe. Insbesondere ist die erste Aufsatzhöhe größer als die zweite Aufsatzhöhe. Alternativ oder zusätzlich kann die erste Aufsatzhöhe im Wesentlichen so hoch sein wie die Sockelhöhe. Durch die Begrenzung auf die oben genannten Maßbereich können die Komponenten einfach transportiert und gehandhabt werden, wahlweise mittels konventioneller Lastkraftwagen, gegebenenfalls sogar mit bloß einem Kleintransporter, insbesondere einem Kleintransporter ohne offene Ladefläche.

Bei einer bevorzugten Ausführungsform eines Behältersystems, die mit der vorigen kombinierbar ist, weist die Sockelanordnung, der Innenbehälter, der erste Aufsatz und/oder der zweite Aufsatz einen rechteckigen Grundquerschnitt auf. Insbesondere hat der Grundquerschnitt eine erste Kantenlänge im Bereich 50 cm bis 150 cm, Vorsitzweise 100 cm oder 120 cm. Alternativ oder zusätzlich hat der Grundquerschnitt insbesondere eine zweite Kantenlänge im Bereich 50 cm bis 150 cm, vorzugsweise 80 cm oder 120 cm. Alternativ sind andere Grundquerschnittsformen, wie polygonal oder kreisförmig, denkbar. In einer besonders bevorzugten Ausführungsform haben die Sockelanordnung, der erste Aufsatz und der zweite Aufsatz den gleichen Grundquerschnitt, wobei insbesondere zusätzlich der Innenbehälter ebenfalls den gleichen Grundquerschnitt aufweisen kann. Durch die Verwendung des gleichen Grundquerschnitts für mehrere, insbesondere alle, Komponenten des Behältersystem ist eine einfache Stapelbarkeit wie auch eine einfache Montierbarkeit gegeben. Die erfindungsgemäßen Kantenlängenbereiche haben sich als besonders geeignet erwiesen für den Transport von mehreren Einheiten übereinander und/oder nebeneinander auf einer typischen Lastkraftwagen-Lagerfläche und gestatten insbesondere auch einen Transport der Behältersystem-Komponenten in einem Kleintransporter oder ähnliches.

Das Behältersystem weist gemäß einer Ausführungsform eines Sockelanordnung auf, die eine Tragstruktur umfasst, die dazu ausgelegt und eingerichtet ist, mit einem Hubwagen anhebbar zu sein. Insbesondere ist die Tragstruktur EPAL-Paletten-System-kompatibel. Zusätzlich kann es vorgesehen sein, dass der erste Aufsatz und/oder der zweite Aufsatz eine Aufsatz-Tragstruktur aufweist, die mit einem Hubwagen anhebbar und/oder EPA-Paletten-System-kompatibel ist. Gemäß einer besonders bevorzugten Ausführungsform hat ein Behältersystem eine erste Kantenlänge von 120 cm und eine zweite Kantenlänge von 120 cm, sodass zwei baugleiche Behältersysteme nebeneinander auf drei längs orientierte EPAL-System-Paletten aufsetzbar sind. Gemäß einer alternativen besonders bevorzugten Ausführungsform hat ein Behältersystem eine erste Kantenlänge von 80 cm und eine zweite Kantenlänge von 80 cm, sodass drei baugleiche Behältersysteme nebeneinander auf zwei quer orientierten EPAL-System-Paletten aufsetzbar sind.

Bei einer Ausführungsform des Behältersystems umfasst der Innenbehälter mindestens einen Basisbehälter mit wenigstens einer Seitenwand, insbesondere vier rechtwinklig zu einander angeordneten Seitenwänden, und wenigstens einem Boden, der eine konkave Sammelrinne und eine am oder im Boden angeordnete Abgabeöffnung aufweist. Alternativ umfasst der Basisbehälter n Seitenwände, die ein n-seitiges Polygon formen. Insbesondere besteht der der Innenbehälter aus einem solchen Basisbehälter. Es kann bevorzugt sein, dass der Boden und die konkave Sammelrinne derart gestaltet sind, dass sämtliches in dem Basisbehälter befindliches Füllgut in Richtung der Abgabeöffnung geleitet ist. Ein Basisbehälter mit nur einer Seitenwand kann beispielsweise eine (kreis-)zylinderhülsenförmige Außenwand aufweisen. Vorzugsweise ist der Basisbehälter einstückig. Der Basisbehälter ist vorzugsweise derart auf die Sockelanordnung abgestimmt, dass in einem Montagezustand der Boden des Basisbehälters vorzugsweise formkomplementär in einem Aufsatz-Berührkontakt mit der Stützaufnahme ist. Der Boden und/oder die Sammelrinne des Basisbehälters kann mindestens eine Schräge aufweisen einem Winkelbereich von 30° bis 80°, insbesondere 45° bis 70°, vorzugsweise etwa 60°, relativ zu einer Horizontalen. Zusätzlich oder alternativ ist der Basisbehälter vorzugsweise derart auf die Sockelanordnung und den ersten Aufsatz abgestimmt, dass in einem Montagezustand des Behältersystem das obere Ende des Basisbehälters und des ersten Aufsatzes im Wesentlichen gleich hoch angeordnet sind, insbesondere mit einander fluchten.

Das Behältersystem umfasst in einer Weiterbildung, bei der der Innenbehälter einen Basisbehälter wie zuvor beschrieben aufweist, zusätzlich mindestens einen Aufsteckbehälter, der wenigstens eine zu der wenigstens einen Seitenwand des Basisbehälters korrespondierende Aufsteckbehälter-Seitenwand aufweist, insbesondere daraus besteht. Für einen Basisbehälter mit vier rechtwinklig aneinanderstoßenden Seitenwänden kann der korrespondierende Aufsteckbehälter aus vier rechtwinklig einander stoßenden Aufsteckbehälter-Seitenwänden gebildet sein, insbesondere daraus bestehen. Vorzugsweise ist der Aufsteckbehälter bodenlos und/oder deckellos gebildet. Insbesondere besteht der Aufsteckbehälter aus einem hohlzylindrischen Körper, wobei der hohlzylindrische Körper einen Grundquerschnitt aufweisen kann, der polygonal, beispielsweise rechteckig, oder kreisförmig ist, insbesondere formkorrespondierend zu dem Basisbehälter gebildet ist. Vorzugsweise ist der Aufsteckbehälter einstückig. Vorzugsweise ist der Aufsteckbehälter derart auf den zweiten Aufsatz abgestimmt, dass der Aufsteckbehälter und der zweite Aufsatz im Wesentlichen dieselbe Höhe haben. Die Aufsteckbehälter-Höhe kann insbesondere gleich der zweiten Aufsatzhöhe sein, oder im Bereich der Aufsatzhöhe ±10 % liegen. Es kann bevorzugt sein, dass ein Behältersystem mit mehreren zweiten Aufsätzen und mehreren dazu korrespondierenden Aufsteckbehältern ausgestattet ist.

Der Basisbehälter sowie gegebenenfalls der Aufsteckbehälter umfasst ein oder besteht aus einem, vorzugsweise formstabilen, Kunststoffmaterial. Der Basisbehälter sowie gegebenenfalls der Aufsteckbehälter kann vorzugsweise aus einem nicht-Metall-Material gefertigt sein, insbesondere daraus bestehen. Insbesondere ist der Basisbehälter sowie gegebenenfalls der Aufsteckbehälter aus einem Kunststoffmaterial, wie einem Polyethylen, vorzugsweise HPDE gebildet.

Gemäß einer bevorzugten Weiterbildung weist der Basisbehälter eine Aufnahmekapazität von wenigstens 1,0 m³, insbesondere wenigstens 1,3 m³, und/oder nicht mehr als 2,5 m³, insbesondere nicht mehr als 2 m³ auf. Der Aufsteckbehälter weist vorzugsweise eine Aufnahmekapazität von wenigstens 0,7 m³, insbesondere wenigstens 1 m³, und/oder nicht mehr als 1,3 m³, insbesondere nicht mehr als 1,5 m³ auf.

Optional kann das Behältersystem zusätzlich eine insbesondere einstückige Abdeckung für den Innenbehälter aufweisen. Insbesondere weist die Abdeckung eine Zuführöffnung auf. Durch die Zufuhröffnung oder nach Entfernen der Abdeckung kann das Behältersystem mit Füllgut beschickt werden. Vorzugsweise ist die Abdeckung lösbar mit dem Basisbehälter und/oder dem Aufsteckbehälter verbunden. Besonders bevorzugt ist die Abdeckung lösbar, insbesondere in der Vertikalrichtung beweglich, auf entweder den Basisbehälter oder den Aufsteckbehälter aufgesetzt. Beispielsweise kann das Behältersystem nach der initialen Montage an einer Baustelle mit Füllgut, beispielsweise aus Säcken oder einem Big Bag, befüllt werden. Insbesondere kann vorgesehen sein, dass die Abdeckung zum Befüllen in Verbindung mit dem Aufsteck- oder Basisbehälter verbleibt und die Befüllung durch eine, vorzugsweise verschließbare, Zuführöffnung in der Abdeckung erfolgt. Vorzugsweise umfasst das Behältersystem einen Deckel, wie einen Schraubdeckel oder eine Abdeckkappe, zum lösbaren verschließen der Zuführöffnung in der Abdeckung. Die Abdeckung ist vorzugsweise im Bereich der Zuführöffnung mit einem Kragen ausgestattet, der zum Deckel korrespondiert. Insbesondere sind der Deckel und die Abdeckung derart auf das Behältersystem, insbesondere den Aufsteckbehälter oder den Basisbehälter, abgestimmt, dass die Abdeckung gemeinsam mit dem Deckel das Behältersystem verschließt, sodass vorteilhafterweise das Füllgut im Behältersystem gegen widrige Witterung, wie Regen, geschützt ist. Die Zuführöffnung und der Deckel können zentral, beispielsweise mittig, an der Abdeckung angeordnet sein. Bedarfsabhängig kann zu einem späteren Zeitpunkt zusätzliches Füllgut in das Behältersystem eingeführt werden, wozu vorzugsweise, besonders bevorzugt nur, der Deckel vom Behältersystem zu entfernen ist. Ferner kann zu einem späteren Zeitpunkt die Abdeckung, vorzugsweise zusätzlich zum oder einschließlich dem Deckel, vom Behältersystem entfernt werden, um einen Zugriff auf den Innenraum zu erhalten, etwa zum Einsetzen, Entfernen, Reinigen, Warten und/oder Reparieren des Schutzschirms, des Rüttlers, des Rüttelsiebs und/oder der Förderwelle, etc. Die Abdeckung kann einstückig, insbesondere aus einem Kunststoffmaterial, gebildet sein, beispielsweise aus einem Polyethylen, insbesondere HDPE. Die Abdeckung kann insbesondere dabei helfen, das Füllgut in dem Behältersystem vor Wind und Wetter zu schützen.

Gemäß einem zweiten Aspekt der Erfindung ist ein Schutzschirm vorgesehen, der ausgelegt und eingerichtet ist zum Einsetzen in eine konkave Sammelrinne an einem Boden eines Behälters, wie ein Innenbehälter, beispielsweise ein Basisbehälter, für ein rieselfähiges, insbesondere pulverförmiges, Füllgut, wie ein Trockenmörtel für eine Klebe- und/oder Armierungsmasse. Insbesondere kann der Schutzschirm vorgesehen sein für einen Behälter aus einem nicht-Metall-Material, wie einem Kunststoff, beispielsweise Polyethylen, insbesondere HDPE. Der Schutzschirm umfasst eine Stirnplatte und mindestens einen von der Stirnplatte hervorstehenden Barrieresteg. Es ist denkbar, dass der Schutzschirm mehrere Barrierestege umfasst, die sich ausgehend von der Stirnplatte hervorstehend erstrecken. Die Stirnplatte des Schutzschirms ist ausgestattet mit einer Durchführöffnung, die zum Einbringen einer Förderwelle in den Behälter ausgelegt und eingerichtet ist. Die Förderwelle kann beispielsweise die Förderwelle einer Pumpvorrichtung für das rieselfähige Füllgut sein. Die Pumpvorrichtung kann vorzugsweise ausgeführt sein wie eine der in EP 1 445 490 B1 und EP 1 688 176 B1 beschriebenen Pump- und Mischvorrichtungen, die hiermit durch Bezugnahme vollständig in die vorliegende Offenbarung miteinbezogen sind. Der mindestens eine Barrieresteg ist dazu ausgelegt und eingerichtet, die Sammelrinne zumindest teilweise zu bedecken. Im Bereich einer Pumpvorrichtung zum Fördern des Füllguts aus einem Behälter zur weiteren Verwendung an einer Baustelle treten lokal große mechanische Belastungen, beispielsweise Scherkräfte, auf. Um leichte Behältermaterialien, wie beispielsweise Kunststoff oder Pappe, oder allgemein nicht-Metall-Materialien, für eine Vielzahl verschiedener Baumaterialien, die als Füllgut zum Einsatz kommen können, nutzbar zu machen, muss sichergestellt sein, dass die Behältermaterialien den beim Fördern auftretenden Belastungen widerstehen können. Mithilfe des Einsatzes eines Schutzschirms lassen sich besonders kostengünstige und leichte Materialien, die für sich genommen hohen mechanischen Belastungen, wie Scherkräften, nicht standzuhalten vermögen, dennoch in einem Behälter, beispielsweise in einem Behältersystem, für rieselfähiges Füllgut einsetzen. So lassen sich mithilfe des Einsatzes des Schutzschirms erhebliche Kostenersparnisse erzielen.

Gemäß einer Ausführungsform formt der Barrieresteg eine konkave Rinne. Die konkave Rinne kann beispielsweise im Querschnitt V- förmig oder U-förmig sein. Der Schutzschirm kann vorzugsweise aus der Stirnplatte und den rinnenförmigen Barrieresteg bestehen. Vorzugsweise ist die Rinnenform des Barrierestegs angepasst an die, insbesondere formkomplementär zu der, Sammelrinne des Behälters. Vorzugsweise hat der V-förmige Querschnitt eine Schenkelneigung in Bezug auf eine horizontale im Bereich von 30° bis 80°, insbesondere 45° bis 70°, vorzugsweise etwa 60°.

Eine Ausführungsform des Schutzschirms sieht vor, dass der Schutzschirm Metall umfasst. Insbesondere umfasst die Stirnplatte und/oder der mindestens eine Barrieresteg Metall oder besteht daraus. Es kann bevorzugt sein, dass der Schutzschirm vollständig aus Metall besteht. Der Barrieresteg und/oder die Stirnplatte kann eine Wandstärke im Bereich von 0,3 mm bis 1 cm, insbesondere im Bereich 0,1 mm bis 0,5 mm aufweisen. Alternativ kann der Barrieresteg als Opferschicht und/oder aus einem nichtmetall-Material gebildet sein. Ein Barrieresteg, der eine Opferschicht realisiert, kann aus dem gleichen Material oder einem anderen Material wie der Behälter gebildet sein.

Zusätzlich oder alternativ umfasst die Stirnplatte mindestens ein Befestigungsmittel, wie eine Befestigungsaufnahme, die zum Verankern der Pumpvorrichtung an dem Schutzschirm ausgelegt und eingerichtet ist. Beispielsweise kann eine Pumpvorrichtung mithilfe von Verankerungsbolzen mit dem Schutzschirm verbunden werden, um ein unbeabsichtigtes loslösen der Pumpvorrichtung vom Behälter insbesondere während des Betriebs der Pumpvorrichtung zu verhindern.

Optional kann der Schutzschirm zusätzlich eine Fußplatte aufweisen, die gegenüber der Stirnplatte angeordnet ist, wobei der mindestens eine Barrieresteg die Fußplatte mit der Stirnplatte verbindet. Vorzugsweise ist die Fußplatte aus demselben Material gebildet wie die Stirnplatte und/oder der Barrieresteg. Die Fußplatte kann eine Sicherung gegen Beschädigungen des Behälters durch die Förderwelle realisieren.

Gemäß einer bevorzugten Ausführungsform des Schutzschirms ist ein mit dem Schutzschirm verbundenes oder verbindbares Rüttelsieb vorgesehen. Insbesondere weist das Rüttelsieb eine Maschenweite von nicht mehr als 3 cm mal 3 cm, insbesondere nicht mehr als 2 cm mal 2 cm, auf. Die Maschenweite des Rüttelsiebs ist füllgutdurchlässig. Insbesondere weist der Schutzschirm, insbesondere der mindestens eine Barrieresteg, eine Lagerstruktur, wie Lagerbleche auf, die zum Halten des Rüttelsiebs am Schutzschirm ausgelegt und eingerichtet sind. Alternativ oder zusätzlich kann das Rüttelsieb fest mit dem Barrieresteg verbunden, insbesondere verschweißt, sein. Es hat sich herausgestellt, dass rieselfähiges Füllgut in vielen Fällen dazu neigt, infolge des Transports oder bei längeren Standzeiten an einer Baustelle zu verbacken, oder Agglomerate oder Konglomerate zu bilden, was einer unmittelbaren Verwendung des Füllguts an der Baustelle entgegensteht oder zumindest die Förderung beeinträchtigt. Ein mit einem Rüttelsieb ausgestatteter Schutzschirm kann auf einfache Weise unnötigen Materialausschuss vermeiden helfen, sodass sich Kostenersparnisse erzielen lassen. Gemäß einer bevorzugten Ausführungsform des Schutzschirms weist dieser, insbesondere der Barrieresteg, eine Haltestruktur auf, die zum Befestigen eines Rüttlers an dem Schutzschirm ausgelegt und eingerichtet ist. Insbesondere ist die Haltestruktur fest mit dem Schutzschirm verbunden, insbesondere verschweißt. Vorzugsweise kann die Haltestruktur mittelbar mit dem Schutzschirm verbunden sein, beispielsweise via dem Rüttelsieb, wobei die Haltestruktur fest mit dem Rüttelsieb verbunden, vorzugsweise an das Rüttelsieb angeschweißt, sein kann.

Gemäß einer bevorzugten Ausführungsform ist die Förderwelle dazu ausgelegt und eingerichtet, lösbar mit der Pumpvorrichtung verbunden oder verbindbar zu sein. Insbesondere kann die Förderwelle teilweise lösbar mit der Pumpvorrichtung verbunden oder verbindbar sein. Beispielsweise kann die Pumpvorrichtung mehrerer Wellenabschnitte, vorzugsweise mindestens einen Förderwellenabschnitt sowie gegebenenfalls mindestens einen Rührwellenabschnitt und/oder einen zweiten Förderwellenabschnitt umfassen, wobei der Förderwellenabschnitt von mindestens einem anderen Wellenabschnitt lösbar ist. Alternativ kann die Förderwelle vollständig lösbar mit der Pumpvorrichtung verbunden sein. Die Förderwelle könnte in einem solchen Fall vollständig trennbar von einer Antriebseinheit der Pumpvorrichtung sein. Die Förderwelle ist mit einer Wellenlagerung am Schutzschirm gehalten. Insbesondere ist die Wellenlagerung an dem Barrieresteg gegenüber der Durchführöffnung befestigt. Insbesondere ist die Wellenanordnung an einer zu der Stirnplatte entfernten Stelle am Barrieresteg angeordnet. Die Wellenlagerung kann an oder nahe eine Fußplatte angeordnet sein.

Gemäß einer Weiterbildung des Schutzschirms mit Wellenlagerung umfasst die Wellenlagerung einen Axialanschlag, der dazu ausgelegt und eingerichtet ist, eine Axialverlagerung der Förderwelle durch die Durchgangsöffnungen aus dem Schutzschirm hinaus zu verhindern. Der Axialanschlag sichert die von der Pumpe lösbare Förderwelle am Schutzschirm. Insbesondere ist der Axialanschlag dazu ausgelegt und eingerichtet, beim Betrieb der Pumpe auftretende, auf die Förderwelle wirkende axiale Zug- und/oder Druckkräfte aufzunehmen.

Darüber hinaus betrifft die Erfindung einen Behälter für ein rieselfähiges, insbesondere pulverförmiges, Füllgut, wie ein Trockenmörtel für eine Klebe- und/oder Armierungsmasse. Vorzugsweise weist der Behälter eine Füllkapazität von wenigstens 1 m³, insbesondere wenigstens 2 m³, auf. Insbesondere kann der Behälter durch ein oben beschriebenes Behältersystem, beispielsweise als Innenbehälter, vorzugsweise umfassend einen Basisbehälter und einen Aufsteckbehälter, realisiert sein. Der Behälter weist einen Boden mit einer konkaven Sammelrinne auf und einen in den Behälter eingesetzten Schutzschirm, auf der wie oben beschrieben ausgeführt ist. Der Behälter hat eine Abgabeöffnung für das rieselfähige Füllgut, die im Boden oder am Boden angeordnet ist. Der Schutzschirm ist zumindest abschnittsweise formkomplementär an den Boden, insbesondere die Sammelrinne, des Behälters angepasst.

Bei einer Weiterbildung des Behälters mit einem Schutzschirm, dessen Barrieresteg rinnen - förmig ausgestaltet sein kann, ist der mindestens eine Barrieresteg zumindest abschnittsweise, insbesondere vollflächig, formkomplementär zu der Sammelrinne geformt. Es kann bevorzugt sein, dass der insbesondere rinnenförmige Barrieresteg derart formangepasst an die Sammelrinne ist, dass der Barrieresteg über einen Großteil seiner Länge, insbesondere seine gesamte Länge, formkomplementär, insbesondere flächig, an der Sammelrinne anliegt. Durch eine aneinander angepasste Formgestaltung des Schutzschirms und der Sammelrinne kann gewährleistet werden, dass sich kein oder nahezu kein Füllgut-Ausschuss in einem Spaltbereich zwischen Schutzschirm und Sammelrinne ansammeln kann. Vielmehr unterstützt die Sammelrinne eine vollständige Abförderung des rieselfähigen Füllguts aus dem Behälter entlang dessen Boden und Sammelrinne durch eine Abgabeöffnung des Behälters.

Gemäß einer Ausführungsform des Behälters korrespondiert eine Längserstreckung des Schutzschirms von der Stirnplatte, insbesondere bis zur Fußplatte, zu der Breite des Behälters in Richtung der Sammelrinne. Es kann bevorzugt sein, dass der Schutzschirm die Sammelrinne überwiegend oder vollständig bedeckt. Der Schutzschirm dient als Barriere zwischen der Förderwelle der Pumpvorrichtung und dem Behälter und schirmt das Wandmaterial des Behälters von hohen mechanischen Belastungen, wie Scherkräften, ab, sodass ein besonders leichtes und/oder kostengünstiges Wandmaterial verwendbar ist.

Der Behälter weist bei einer Ausführungsform, die mit den vorigen kombinierbar ist, eine Abgabeöffnung auf, die zu der Durchführöffnung korrespondiert. Alternativ oder zusätzlich umfasst der Behälter weniges eine Montageplatte, insbesondere mit einer in die Abgabeöffnung einsetzbaren, ringförmigen Verstärkung. Alternativ kann eine ringförmige Verstärkung zum Einsetzen in die Abgabeöffnung an der Stirnplatte befestigt sein. Die ringförmige Verstärkung schützt den Behälter unmittelbar an der Abgabeöffnung von mechanischen Belastungen durch die Pumpvorrichtung und kann mit mindestens einem Dichtmittel ausgestattet sein, um einen Verlust von Füllgut beim Übergang aus dem Behälter zur Pumpvorrichtung durch die Abgabeöffnung zu vermeiden und so Kosten zu sparen. Weiter alternativ oder zusätzlich kann die Montageplatte mindestens eine Montageöffnung aufweisen, die zu dem mindestens einen Befestigungsmittel zum Verankern der Pumpvorrichtung an dem Schutzschirm korrespondiert. Die Montageplatte kann nach Art einer Unterlegscheiben zwischen dem Behälter und dem darin befindlichen Schutzschirm einerseits und andererseits der Pumpvorrichtung angeordnet werden, um den Behälter vor Belastungen des Behälters beispielsweise durch Lagerkräfte und/oder Reaktionskräfte im Bereich der Befestigungsmittel und/oder Verankerungsmittel zu schützen.

Gemäß einem weiteren Aspekt der Erfindung ist ein Fördersystem vorgesehen, dass einen Behälter wie zuvor beschrieben umfasst sowie eine Pumpvorrichtung für das rieselfähige Füllgut. Die Pumpvorrichtung umfasst eine Förderwelle. Zwischen der Förderwelle und der Sammelrinne ist der Schutzschirm angeordnet. Der Schutzschirm nimmt mechanische Belastungen ausgehend von der Förderwelle auf und schirmt das Wandmaterial des Behälters von diesen Belastungen ab. Die Pumpvorrichtung ist vorzugsweise ausgeführt wie eine der in EP 1 445 490 B1 und/oder EP 1 688 176 B1 beschriebene Pump- und Mischvorrichtung, die hiermit durch Bezugnahme vollständig in die vorliegende Offenbarung miteinbezogen sind.

Bei einer Ausführungsform des Fördersystems ist der Behälter zumindest im Bereich der Sammelrinne aus einem Nicht-Metall-Material gebildet oder besteht daraus. Insbesondere umfasst der Behälter zumindest im Bereich der Sammelrinne ein Kunststoffmaterial, wie Polyethylen, vorzugsweise HDPE, oder besteht daraus.

Eine andere Ausführungsform des Fördersystems, die mit den vorigen korrigierbar ist, sieht vor, dass die Pumpvorrichtung mindestens ein Verankerungsmittel umfasst, das zum Befestigen der Pumpvorrichtung an dem Behälter, insbesondere der Montageplatte und/oder dem Schutzschirm, vorzugsweise dem mindestens einen Befestigungsmittel, ausgelegt und eingerichtet ist. Vorzugsweise weist die Pumpvorrichtung mehrere gleichmäßig verteilte Verankerungsmittel auf, insbesondere zwei einander diametral gegenüberliegende.

Bei einer Weiterbildung des Fördersystems mit Verankerungsmittel umfasst das Verankerungsmittel oder der Behälter mindestens ein Stellmittel. Das Stellmittel ist verstellbar zwischen einem Befestigungszustand, in dem das Verankerungsmittel die Pumpvorrichtung an dem Behälter fixiert, und einem Freigabezustand, in dem die Pumpvorrichtung von dem Behälter lösbar ist. Alternativ oder zusätzlich umfasst das Stellmittel einen Stellexzenter und der Behälter umfasst eine Stellexzenteraufnahme, wobei der Stellexzenter und die Stellexzenteraufnahme dazu ausgelegt sind, eine lösbare Form- und/oder Kraftschlussverbindung einzugehen. Es sei klar, dass alternativ das Verankerungsmittel die Stellexzenteraufnahme umfassen und der Behälter den Stellexzenter umfassen kann. Vorzugsweise ist das Stellmittel werkzeugfrei verstellbar, insbesondere durch Handbetätigung.

Gemäß einer Ausführungsform des Fördersystems umfasst die Pumpvorrichtung mehrere lösbar miteinander verbundene oder verbindbare Wellenabschnitte. Beispielsweise kann die Pumpvorrichtung einen Förderwellenabschnitt und einen Rührwellenabschnitt aufweisen. Insbesondere ist der Förderwellenabschnitt dazu ausgelegt und eingerichtet, Füllgut parallel zu der Förderwelle zu bewegen. Der Rührwellenabschnitt ist insbesondere dazu ausgelegt und eingerichtet, vorzugsweise unter Einwirkung einer zugeführten Flüssigkeit, wie Wasser, das Füllgut zu vermengen. Die Wellenabschnitte sind mittels einer Wellenkupplung mit einander verbunden oder verbindbar. Die Wellenkupplung umfasst einen Steckabschnitt und einen zu dem Steckabschnitt formkomplementären Aufnahmeabschnitt. Dabei kann die Wellenkupplung einen unrunden, insbesondere polygonalen, vorzugsweise vierkant-, Querschnitt aufweisen.

Gemäß einer Weiterbildung des Fördersystems mit mindestens einem Förderwellenabschnitt umfasst dieser eine Förderschnecke. Insbesondere sind zumindest abschnittsweise am Außenumfang der Förderschnecke radiale Vorsprünge angeordnet. Insbesondere sind die radialen Vorsprünge Rippen, die sich in Axialrichtung der Drehachse des Förderwellenabschnitt erstrecken. Vorzugsweise erstrecken sich die Rippen parallel in Axialrichtung der Drehachse. Bevorzugt erstrecken sich die Rippen über mindestens einen Schneckengang, insbesondere mehrere Schneckengänge. Vorzugsweise sind die radialen Vorsprünge dazu ausgelegt und eingerichtet, insbesondere in Zusammenwirkung mit dem Boden und/oder dem Schutzschirm, Rüttelbewegungen zu bewirken.

Bei einer Ausführungsform des Fördersystems korrespondieren die Abgabeöffnung und die Durchführöffnung zur Förderwelle folgt insbesondere nehmen die Abgabeöffnung und die Durchführöffnung die Förderwelle vorzugsweise koaxial auf.

Die Erfindung betrifft trifft auch ein Fördersystem für ein rieselfähiges, insbesondere pulverförmiges Füllgut, wie Trockenmörtel für eine Klebe- und/oder Armierungsmasse, das insbesondere wie oben beschrieben ausgeführt sein kann. Das Fördersystem umfasst ein Behältersystem, welches wie oben beschrieben ausgeführt ist, und eine Fördervorrichtung, wie eine Pumpvorrichtung, zum Herausfördern des Füllguts aus dem Innenbehälter.

Im Sinne der vorliegenden Offenbarung sei klar, dass Richtungsangaben wie "oben", "unten", "Vertikal", "Horizontal" oder Ähnliches sich in Bezug auf eine Ausrichtung des zusammengesetzten Behältersystems, Behälters oder Fördersystems in einem aufgestellten Zustand bei dessen bestimmungsgemäßen Verwendung an einer Baustelle zu verstehen sind, wobei insbesondere während des Transports des Fördersystems, Behälters, Behältersystems oder dessen einzelner Komponenten eine andere Ausrichtung gewählt sein kann.

Die Erfindung betrifft überdies die Verwendung eines Behältersystems, eines Schutzschirms, eines Behälters oder eines Fördersystems wie oben beschrieben zum Abgeben eines rieselfähigen, insbesondere pulverförmigen, Füllguts, wie ein Trockenmörtel für eine Klebe- und/oder Armierungsmasse, insbesondere an einer Baustelle.

Vorteilhafte Weiterbildungen sind in den abhängigen Ansprüchen angegeben. Weitere Eigenschaften, Merkmale und Vorteile der Erfindung werden durch die folgende Beschreibung einer bevorzugten Ausführungsform der Erfindung anhand der beiliegenden Zeichnung deutlich, in denen zeigen:
- Figur 1: eine schematische Explosionsansicht eines Behältersystems gemäß der Erfindung;
- Figur 2: eine Detailansicht der Abdeckung und des Aufsteckbehälters des Behältersystems gemäß Figur 1;
- Figur 3: eine Detailansicht des Basisbehälters und des Aufsteckbehälters des Behältersystems gemäß Figur 1;
- Figur 4: eine perspektivische Darstellung der Sockelanordnung und der Aufsätze des Behältersystems gemäß Figur 1;
- Figur 5: eine andere Explosionsdarstellung des Behältersystems gemäß Figur 1;
- Figur 6: eine Frontansicht des Behältersystems gemäß Figur 1;
- Figur 7: eine Detailansicht des Steckadapters des Behältersystems gemäß Figur 1;
- Figur 8: eine Explosionsansicht eines Innenbehälters mit einem erfindungsgemäßen Schutzschirm;
- Figur 9: eine perspektivische Darstellung einer bevorzugten Ausführungsform eines erfindungsgemäßen Schutzschirms;
- Figur 10: eine schematische Darstellung eines erfindungsgemäßen Fördersystems;
- Figur 11: eine Detaildarstellung der Pumpvorrichtung des Fördersystems gemäß Figur 10;
- Figur 12: eine Detaildarstellung der Wellenkupplung der Pumpvorrichtung gemäß Figur 11;
- Figur 13: eine schematische Frontansicht eines Sperrschiebers;
- Figur 14: eine schematische Schnittansicht durch den Sperrschieber gemäß Figur 13; und
- Figur 15: eine Darstellung einer Förderwelle in einem Schutzschirm;
- Figur 16a: eine Darstellung einer Verankerungsvorrichtung, die eine Pumpvorrichtung an dem Behälter hält;
- Figur 16b: eine Darstellung der Verankerungsvorrichtung nach Figur 16a in einem Freigabezustand;
- Figur 16c: eine Darstellung der Verankerungsvorrichtung nach Figur 16a mit gelöster Verankerungsvorrichtung und teilweise gelöster Wellenkupplung; und

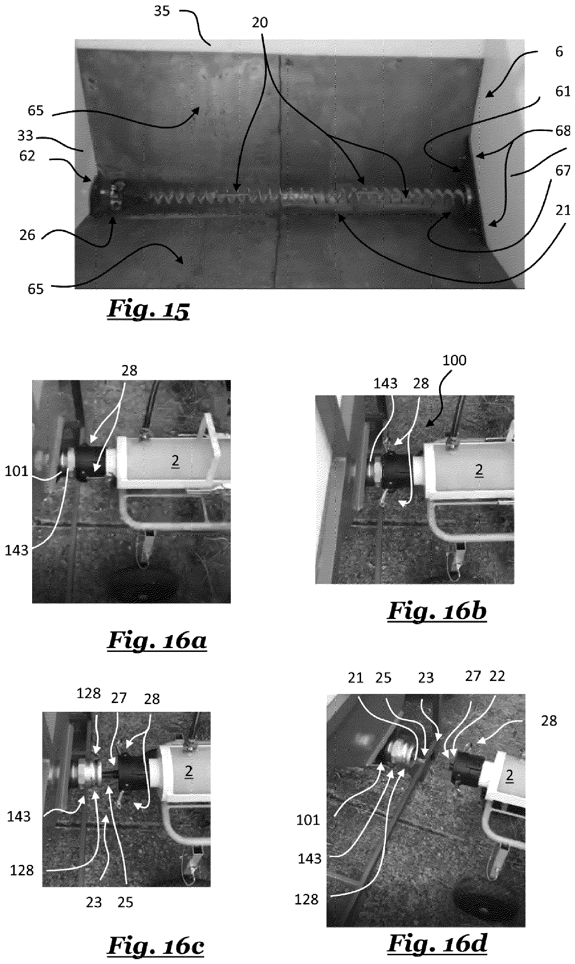

- Figur 16c: eine Darstellung der Verankerungsvorrichtung nach Figur 16a mit gelöster Wellenkupplung.

Es sei klar, dass das im Folgenden anhand der Figuren exemplarisch dargestellte erfindungsgemäße System 1, der erfindungsgemäße Schutzschirm 6 und das erfindungsgemäße Fördersystem 100, in der vorliegenden Offenbarung nur schematisch dargestellt und exemplarisch beschrieben werden. Im Rahmen der Offenbarung sind zahlreiche Variationen gegenüber den exemplarisch in den Figuren dargestellten bevorzugten Ausführungsformen denkbar.

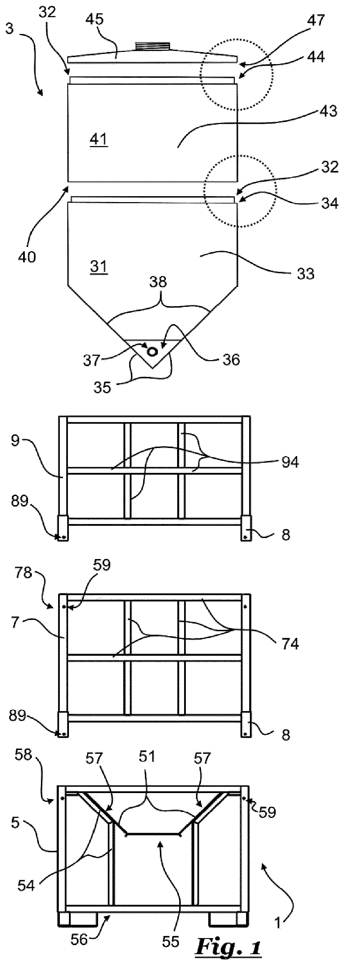

Figur 1 zeigt eine Explosionsansicht des erfindungsgemäßen Behältersystems 1. Als wesentliche Komponenten umfasst das Behältersystem 1 einen Innenbehälter 3, einen Sockelabschnitt 5 und zwei unterschiedliche Aufsätze 7, 9. Der Innenbehälter 3 setzt sich aus einem Basisbehälter 31 und einem Aufsteckbehälter 41 zusammen und hat eine Abdeckung 45. Die einzelnen Komponenten des Behältersystems 1 sind voneinander vereinzelt dargestellt, so wie sie beispielsweise einzeln transportiert werden können.

Die Abdeckung 45 ist formkomplementär zum Aufsteckbehälter 41 geformt, um eine Öffnung an dessen Oberseite vollständig zu bedecken. Der Aufsteckbehälter 41 und der Basisbehälter 31, die zusammen den Innenbehälter 3 bilden, haben den gleichen, beispielsweise rechteckigen, Grundquerschnitt. Es sei klar, dass der Innenbehälter, insbesondere der Basisbehälter und/oder der Aufsteckbehälter, eine andere, von der rechteckform abweichende, Form haben kann. Beispielsweise kann der Innenbehälter, insbesondere der Basisbehälter und/oder der Aufsteckbehälter, zumindest abschnittsweise oder im Wesentlichen vollständig einen kreisförmigen oder polygonalen Grundquerschnitt haben (nicht dargestellt). Der Aufsteckbehälter 41 ist einstückig aus einem Kunststoffmaterial wie HDPE gebildet. Der Aufsteckbehälter 41 besteht aus Aufsteckbehälter-Seitenwänden 43, die einen Innenraum zum Aufnehmen von Füllgut außenumfänglich umgeben. Der Aufsteckbehälter 41 kann als rohrförmig bezeichnet werden. Der Innenraum des Aufsteckbehälters 41 bildet einen durchgehenden Hohlraum von der Oberseite bis zur Unterseite des Aufsteckbehälters 41. Es ist denkbar, dass der Aufsteckbehälter innenseitig mit einer Stützstruktur ausgestaltet ist, wobei eine Stützstruktur in Bezug den Durchgang von Ober- zur Unterseite des Aufsteckbehälters 41 füllgutdurchlässig ist. Der Aufsteckbehälter 41 kann etwa 70 cm hoch sein und einen Grundquerschnitt von etwa 1,4 m² haben.

Zur Anordnung unterhalb des Aufsteckbehälters ist der Basisbehälter 31 vorgesehen. Der Basisbehälter 31 hat den gleichen Grundquerschnitt wie der Aufsteckbehälter 41. Am unteren Ende des Basisbehälters 31 ist ein Boden 35 vorgesehen. Umfänglich weist der Basisbehälter 31 Seitenwände 33 auf. Die Seitenwände 33 und der Boden 35 sind einstückig gebildet. Der abgebildete Basisbehälter 31 besteht aus dem Boden 35 und den Seitenwänden 33. Bei der hier exemplarisch dargestellten Ausführungsform ist nahe zum Boden 35 eine Abgabeöffnung 37 in einer Seitenwand 33 vorgesehen, durch die das Füllgut aus dem Basisbehälter 31 abgegeben werden kann. Alternativ kann eine (nicht näher dargestellte) Abgabeöffnung im Boden 35 gebildet sein.

Der Behälter hat im Bereich des Bodens 35 eine Sammelrinne 36 für das Füllgut. Bei der in Fig. 1 dargestellten Ausführungsform setzt sich der Boden 35 aus zwei einander gegenüberliegenden schrägen Bodenflächen 38 zusammen, die V-förmig geformt sind. Die Bodenflächen 38 bilden die konkave Sammelrinne 36. Die Abgabeöffnung 37 ist im Bereich der Sammelrinne 36 angeordnet. Die Bodenflächen sind in Bezug eine horizontale geneigt und haben einen Neigungswinkel von etwa 60°. Stirn- und fußseitig in Bezug auf die Richtung der Sammelrinne 36 sind die Bodenflächen 38 mit den Außenseiten 33 verbunden und die Sammelrinne so durch zwei einander diametral gegenüberliegende Außenseiten 33 begrenzt. Es sei klar, dass der Boden alternativ eine andere Querschnittsgestalt haben kann. Beispielsweise kann der Boden asymmetrisch, rinnenförmig oder trichterförmig sein (nicht dargestellt).

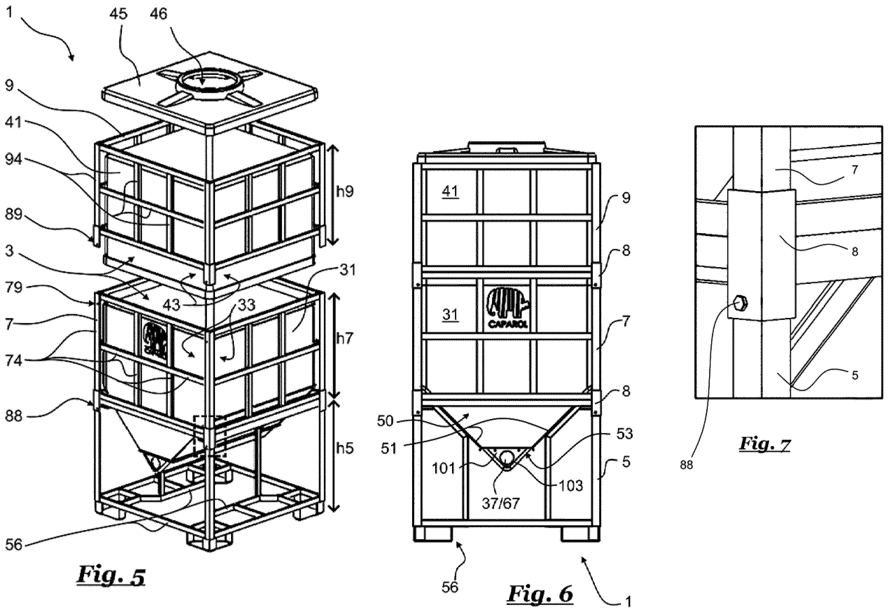

Der Basisbehälter 31 kann einen Grundquerschnitt von etwa 1,4 m² haben. Der Basisbehälter 31 ist in Vertikalrichtung höher als der erste Aufsatz 7. Der Basisbehälter 31 kann eine Höhe im Bereich von etwa 1 m bis etwa 1,70 m aufweisen, vorzugsweise im Bereich von etwa 1,30 m bis 1,50 m. In dem nachfolgend beispielsweise anhand von Fig. 5 beschriebenen Montagezustand des Behältersystems 1 ist die oberen Kante 32 des Basisbehälters 31 in etwa auf derselben Höhe angeordnet wie die Oberkante des ersten Aufsatzes 7. Der Boden 35 des Basisbehälters 31 ragt aus dem Bereich des ersten Aufsatzes 7 in Vertikalrichtung nach unten heraus, in den Bereich der Sockelanordnung 5 hinein.

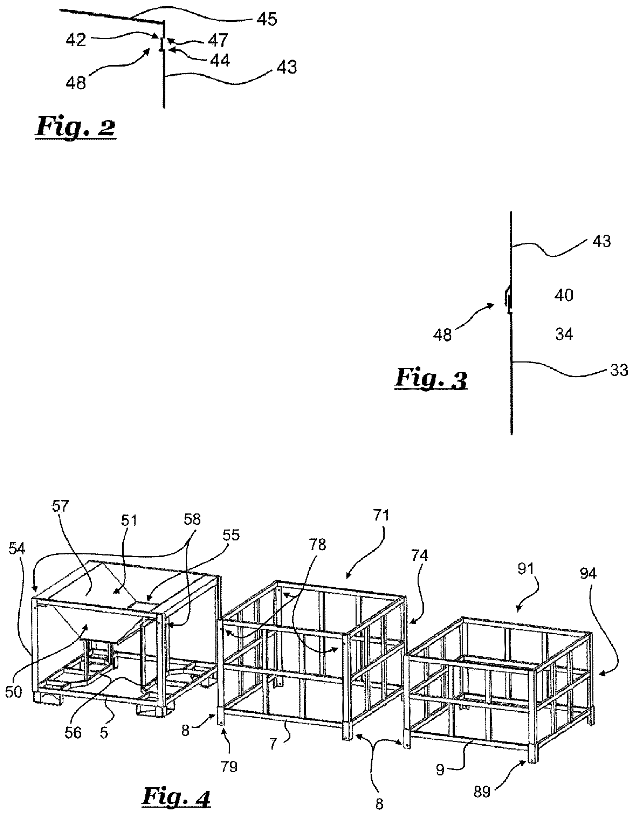

Die Figuren 2 und 3 zeigen Detailansichten, die einerseits den oberen, andererseits den unteren Kantenbereich des Aufsteckbehälters 41 und die jeweils damit in Eingriff bringbare Kante 47 einerseits der Abdeckung 45, andererseits des Basisbehälters 31. In der Abdeckung 45 ist eine Zuführöffnung 46 zum Befüllen des Innenbehälters 3 vorgesehen. Die Zuführöffnung 46 ist von einem Kragen umgeben, der mit einem Deckel (nicht dargestellt) belegt werden kann. Der Deckel kann beispielsweise als Schraubverschluss realisiert sein. Deckel und Abdeckung 45 können vom Innenbehälter 3 entfernt werden, um zum Reinigen auf den Innenraum zuzugreifen.

Der Aufsteckbehälter 41 hat eine obere Randkante 42, entlang der sich vollumfänglich eine Schulter 44 erstreckt, auf die die Abdeckung 45 oder ein weiterer, nicht dargestellter, Aufsteckbehälter aufgesetzt werden kann. Bei der in Figur 2 abgebildeten exemplarischen Ausführungsform steht die Schulter 44 des Aufsteckbehälters 41 nach innen vor, sodass die Kante 47 der Abdeckung 45 die Randkante 42 außenumfänglich umschließen und auf der Schulter 44 aufsitzen kann.

Der Basisbehälter 31 weist an seiner oberen Randkante 32 eine Schulter 34 auf. Die Schulter 34 an der oberen Randkante 32 des Basisbehälters 31 kann korrespondierend zu der Schulter 44 an der oberen Randkante 42 des Aufsteckbehälters 41 geformt sein. Bei der in Figur 3 abgebildeten exemplarischen Ausführungsform steht die Schulter 34 des Basisbehälters 41 nach innen vor, sodass die Kante 47 der Abdeckung die Randkante 42 außenumfänglich umschließen und auf der Schulter 44 aufsitzen kann. Wie in Fig. 3 abgebildet, kann an der unteren Kante 40 des Aufsteckbehälters 41 eine Aufnahme ausgeformt sein, in die die obere Randkante einführbar ist (wie auch entsprechend an der unteren Kante 47 der Abdeckung 45, nicht näher dargestellt).

An den Kantenbereichen können, lose eingelegt oder befestigt an dem Basisbehälter, dem Aufsteckbehälter und/oder der Abdeckung, Dichtungen, beispielsweise Gummidichtung 48, vorgesehen sein. Falls der Behälter mit einem pastösen oder flüssigen Füllgut befüllt werden soll, kann der Behälter alternativ einstückig ausgeführt sein. Gemäß einer weiteren Alternative kann ein mehrteiliger Behälter, wie der hier dargestellte, aus einem Basisbehälter 31 und einem Aufsteckbehälter 41 zusammengesetzte Innenbehälter 3, innenseitig mit einem (nicht näher dargestellten) fluiddichten Inlay überzogen sein oder ein fluiddichtes Inlay eingelegt sein.

Die in den Figuren 1, 4 und 5 gezeigte Sockelanordnung 5 weist eine Stützaufnahme 51 auf, die dazu ausgelegt und eingerichtet ist, den Innenbehälter 3 zu tragen. Die Stützaufnahme 51 ist in der hier abgebildeten Ausführungsform formkomplementär zu den Bodenflächen 38 des Basisbehälters 31 geformt. Die Stützaufnahme 51 umfasst einander gegenüberliegende Schrägen 57 mit einem Neigungswinkel in Bezug auf die Horizontale von hier exemplarisch 60°. Die Stützaufnahme 51 ist konkav geformt und kann so den Innenbehälter 3 stabil Aufnehmen. Die schrägen Flächen 57 sind formkomplementär zu den schrägen Bodenflächen 38 des Basisbehälters 31 ausgeführt. An den Stirn- und der fußseitigen Enden der schrägen Flächen 57 können vertikale Halteflächen 50 vorgesehen sein. Solche Halteflächen 50 können dabei helfen, den Innenbehälter 3 im Bereich der größten Gewichtslast durch das Füllgut sicher und formstabil zu halten. Die hier dargestellten Halteflächen 50 haben die Form eines gleichschenkligen Parallelogramms. Gemäß einer nicht näher dargestellten alternativen Ausführungsform ist es denkbar, dass anstelle einer vertikalen Haltefläche 58 eine weitere schräge Fläche vorgesehen ist, sodass eine trichterförmige Stützaufnahme 51 gebildet würde. Es ist denkbar, dass die Stützaufnahme 51 aus einer einzigen schrägen Fläche gebildet ist, die beispielsweise asymmetrisch und/oder kegelstumpfförmig sein kann (nicht näher dargestellt).

Am unteren Ende 53 weist die Stützaufnahme 51 eine Öffnung 55 auf. Die Öffnung 55 erlaubt es, Füllgut aus dem Innenbehälter 3 ungehindert durch die Sockelanordnung 5 abzugeben. Die Öffnung kann formangepasst an die Abgabeöffnung 37 gestaltet sein (nicht näher dargestellt). Bei der hier abgebildeten bevorzugten Ausführungsform bildet die Öffnung 55 einen rechteckigen Durchgang durch die Stützaufnahme 51. Die Öffnung 55 ist umfänglich eingerahmt durch die schrägen Flächen 57 und die Halteflächen 50. Die konkave Sammelrinne 36 am Boden 35 des Behälters 31 kann, wie beispielsweise in Fig. 6 zu sehen, im Montagezustand des Behältersystems 1 in diese Öffnung 55 vollständig eingesetzt sein und über das untere Ende 53 der Stützaufnahme 51 in Vertikalrichtung nach unten hervorstehen. Die Abgabeöffnung 37 ist in dem Bereich des Bodens 35 des Innenbehälters 3 vorgesehen, unterhalb der Stützaufnahme 51 hervorsteht. Die Unterseite der Sockelanordnung 5 bildet eine Tragstruktur 56, die vorzugsweise EPAL-Paletten-System-kompatibel ausgeführt sein kann, um die Sockelanordnung 5 einfach mit gebräuchlichen Hubwagen, Gabelstaplern oder dergleichen zu transportieren.

Das Behältersystem 1 umfasst mehrere Aufsätze 7 und 9, die mit einem jeweiligen Steckadapter 8 mit einander und der Sockelanordnung 5 verbunden werden können. Fig. 4 zeigt eine perspektivische Ansicht der vereinzelten und nebeneinander auf einem Boden stehenden beiden Aufsätze 7 und 9 und der Sockelanordnung 5.

Der erste, untere Aufsatz 7 besteht aus einem Gittergerüst 74. Auch der zweite, obere Aufsatz 9 besteht aus einem Gittergerüst 94. Die Öffnungen des Gittergerüst 74, 94 sind großflächig gestaltet, um Gewicht zu sparen, und wären daher durchlässig für das rieselfähige Füllgut. Der erste Aufsatz 7 definiert einen ersten Aufnahmeraum 71 in den der Basisbehälter 31 großenteils aufgenommen wird. Nur der Bodenbereich des Basisbehälters 31 wird an der Sockelanordnung 5 aufgenommen. Der zweite Aufsatz 9 definiert einen zweiten Aufnahmeraum 91, der zum Aufnehmen des Aufsteckbehälters 41 ausgelegt und eingerichtet ist.

Die Aufsätze 7, 9 haben vorzugsweise den gleichen Grundquerschnitt. Insbesondere ist der Grundquerschnitt sowohl der Aufsätze 7 und 9 als auch des Innenbehälters 3, insbesondere des Basisbehälters 31 und des Aufsteckbehälters 41, gleich. Beispielsweise können die Aufsätze 7 und 9 wie auch der Innenbehälter 3 einen rechteckigen Grundquerschnitt aufweisen. Vorzugsweise ist auch der Grundquerschnitt der Sockelanordnung 5 gleich dem Grundquerschnitt der Aufsätze 7 und 9. Bei der hier dargestellten bevorzugten Ausführungsform sind an den vier Ecken der Aufsätze 7, 9 je ein Steckadapter 8 vorgesehen, der fußartig nach unten absteht. Die Unterseite der Aufsätze 7 und 9 kann gebildet sein durch eine Querstrebe des Gittergerüst 74 beziehungsweise 94 mit einem davon abstehenden Fuß und vorzugsweise EPAL-Paletten-System-kompatibel ausgeführt sein kann, sodass ein Aufsatz 5, 7 einfach mit gebräuchlichen Hubwagen, Gabelstaplern oder dergleichen transportfähig ist. Der Grundquerschnitt der Aufsätze 7, 9 kann etwa 1,4 m² messen. Die Seitenlänge des Grundquerschnitts kann im Bereich 0,8 m bis 1,4 m, insbesondere bei etwa 1,2 m, liegen. Die erste Aufsatzhöhe h5 ist bei der hier abgebildeten Ausführungsform größer als die zweite Aufsatzhöhe h7. Die erste Aufsatzhöhe h5 beträgt etwa 1 m. Die zweite Aufsatzhöhe h7 beträgt etwa 70 cm. Alternativ ist es denkbar, dass die Aufsätze 7, 9 dieselbe Höhe haben (nicht näher dargestellt).

Die Innenräume 71 und 91 der Aufsätze 7 und 9 sind ausgelegt und eingerichtet zum vorzugsweise formkomplementären Aufnehmen des Innenbehälters 3. Der jeweilige Innenraum 71 oder 91 bildet einen hindernisfreien vertikalen Durchgang durch den jeweiligen Aufsatz 7 beziehungsweise 9. Im vereinzelten Transportzustand der Aufsätze 7, 9 sind durch die Löcher der Gitter- und/oder Fachwerkstruktur 74, 94 und den leeren Innenraum 71, beziehungsweise 91 große Freiräume bereitgestellt, sodass beim Transport der Aufsätze 7, 9 gleichzeitig viele andere Gegenstände kompostiert werden können, die in den Innenraum 71, 91 und/oder durch die Öffnungen der Gitter- und/oder Fachwerkstruktur 74, 94 passen. Auch die Sockelanordnung 5 kann mit einem Gitter- und/oder Fachwerkgerüst 54 gebildet sein, welches bei geringem Gewicht eine hohe strukturelle Festigkeit und Steifigkeit bereitstellt.

Fig. 5 zeigt ein teilweise zusammengesetztes Behältersystem 1. Der erste Aufsatz 7 ist mit dessen Steckadapter 8 auf einen Steckabsatz 58 der Sockelanordnung 5 aufgesetzt. Ein lösbarer Befestigungsriegel 88 sitzt in einer Riegelaufnahme 59 der Sockelanordnung und sichert den Aufsatz 7 an der Sockelanordnung 5. Der Basisbehälter 31 ist in den ersten Innenraum 71 und die Stützaufnahme 51 eingesetzt. Die Sicherung ist in Figur 7 vergrößert dargestellt.

In den zweiten Innenraum 91 des zweiten Aufsatzes 9 ist der Aufsteckbehälter 41 bereits eingesetzt. Wie anhand von Fig. 5 zu erahnen, kann der Aufsteckbehälter 41 gemeinsam mit dem zweiten Aufsatz 9 auf die bereits zusammengefügten Komponenten des Behältersystems 1 aufgesetzt werden. Steckadapter 8 am unteren Ende des zweiten Aufsatzes 9 können zu diesem Zweck über formkomplementären Steckabsatz 78 des ersten Aufsatzes 7 gestülpt werden. Riegelaufnahmen 79 und 89 erlauben das Einfügen von Befestigungsriegeln 88 zum Befestigen der Aufsätze 5, 7 aneinander.

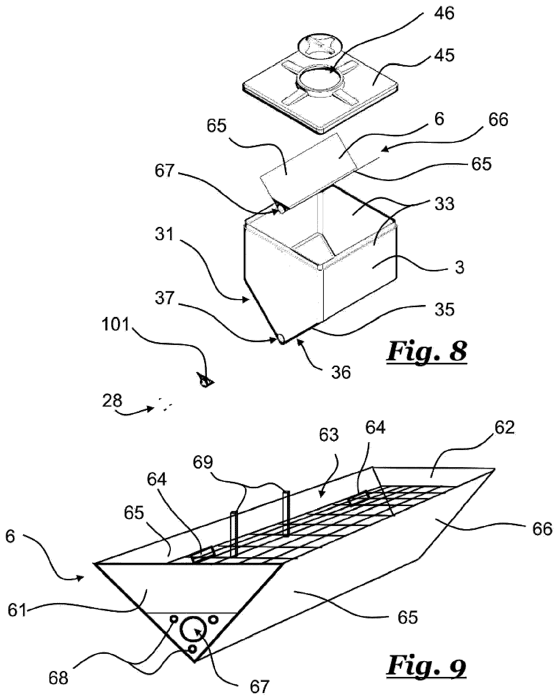

Fig. 8 zeigt eine Explosionsdarstellung eines Behälters, der hier als ein aus einem Basisbehälter 31 bestehender Innenbehälter 3 dargestellt ist, mit einem erfindungsgemäßen Schutzschirm 6 gemäß einer ersten Ausführungsform. Eine zweite Ausführungsform des Schutzschirms 6 zeigt Fig. 9. Bezüglich des in Fig. 8 abgebildeten Behälters wird auf die obige Beschreibung des Basisbehälters 31 Bezug genommen. Eine Abdeckung 45 mit einer verschließbaren Zufuhröffnung 46 für Füllgut kann unmittelbar auf den Behälter aufgesetzt werden. Zum Beschicken des Behälters mit rieselfähigem Füllgut kann die Zufuhröffnung 46 geöffnet oder die Abdeckung 45 entfernt werden.

Der Schutzschirm 6 ist dazu ausgelegt und eingerichtet in die Sammelrinne 36 am Boden 35 des Behälters eingesetzt zu werden. Die Sammelrinne 36 kann, wie abgebildet, einen V-förmigen Querschnitt haben. Es sind jedoch auch andere konkave Querschnittsformen für die Sammelrinne 36 denkbar, beispielsweise U-förmig oder kastenförmig. Als wesentliche Bestandteile umfasst der Schutzschirm eine Stirnplatte 61 mit einer darin vorgesehenen Durchführöffnung 67 und einem sich ausgehend von der Stirnplatte 61 erstreckenden Barrieresteg 66. Der Barrieresteg 66 kann zweckmäßigerweise formangepasst an die Sammelrinne 36 gestaltet sein. In der hier dargestellten Ausführungsform setzt sich der Barrieresteg 66 aus zwei einander gegenüberliegenden Flügeln 65 zusammen, die eine V-Form bilden und eine Neigung gegenüber der Horizontale von etwa 60° haben. In einem Montagezustand kann der Schutzschirm 6 formkomplementär am Boden 35 des Behälters aufgesetzt werden, und der Behälter sodann von oben, vorzugsweise durch die Zuführöffnung 46 in der Abdeckung 45, mit Füllgut beschickt werden. Dabei kann es bevorzugt sein, dass die Durchführöffnung 67 korrespondierend zu der Abgabeöffnung 37 des Behälters angeordnet ist. Die Abgabeöffnung 37 und die Durchführöffnung 67 können formgleich, vorzugsweise mit derselben Querschnittsform und/oder den gleichen Querschnittsdimensionen, gestaltet sein. Das rieselfähige Füllgut kann entlang des konkaven Bodens 35 in den rinnenförmigen Barrieresteg 66 in der Sammelrinne 36 wandern und von dort aus durch die Durchführöffnung 67 und die Abgabeöffnung 37 abgegeben werden.

Der in Fig. 8 abgebildete Schutzschirm 6 ist aus dem Stirnblech 61 und dem rinnenförmigen Barrieresteg 66 gebildet. Das Stirnblech 61 und die Flügelbleche 65 des Barrierestegs 66 können aus miteinander verschweißten Metall-Blechen gebildet sein. Der Schutzschirm 6 dient dazu, den Behälter in dessen mechanisch am stärksten belasteten Bereich zu schützen, wo zum einen die Masse des rieselfähigen Füllguts und zum anderen Reibungskräfte infolge häufiger Füllgut-Abgabe-Bewegungen wirken. Die vertikale Höhe der Stirnplatte 61 kann abgestimmt sein auf den Bereich des Behälters, der durch die Öffnung 55 einer Sockelanordnung 5 hervorsteht. Die Flügel 65 können eine größere vertikale Erstreckung haben als die Stirnplatte 61.

Die Längserstreckung des Barrierestegs 66 entspricht der Breite des Behälters im Bereich von dessen Rinne 36. Der Barrieresteg 66 erstreckt sich entlang der gesamten Rinne 36 von einer ersten Seitenwand 33, zu einer zweiten, gegenüberliegenden Seitenwand 33 des Behälters.

Eine andere Ausführungsform eines Schutzschirms 6 zeigt Fig. 9. Der Schutzschirm 6 gemäß Fig. 4 unterscheidet sich von dem zuvor beschriebenen Schutzschirm nach Fig. 8 durch die Hinzunahme weiterer Komponenten. So ist der Schutzschirm 6 beispielsweise ausgestattet mit einem Rüttelsieb 63, dass eine Maschenweite mit wenigen Zentimetern Breite aufweist. An dem Schutzschirm 6 kann weiterhin eine Haltestruktur 69 zum Befestigen einer Rudelvorrichtung vorgesehen sein. Beispielsweise kann die Haltestruktur 69 durch Aufnahmen gebildet sein, die an einen Flügeln 65 des Barrieresteg 66 befestigt sind. Die Verwendung eines Rüttelsiebs 63 oder eines Rüttlers (nicht näher dargestellt) kann für die Bereitstellung von rieselfähigem Füllgut insbesondere dann von Vorteil sein, wenn das Füllgut dazu neigt, bei langen Standzeiten oder infolge von Vibrationen beim Transport zu Verklumpen. Zur Befestigung des Rüttelsiebs 63 an dem Schutzschirm 6 können an den Flügeln 65 befestigte Lagerbleche 64 bereitgestellt sein, auf die das Rüttelsieb 63 aufgelegt wird.

An dem zur Stirnplatte 61 gegenüberliegenden Ende des Barrieresteg 66 ist eine Fußplatte 62 vorgesehen. Die Stirnplatte 61 und die Fußplatte 62 haben hier beispielsweise eine Dreiecksform, die sich entlang der vollständigen Höhe der Flügeln 65 erstreckt. Der durch Stirnplatte 61, Fußplatte 62 und Flügeln 65 gebildete Schutzschirm 6 bildet eine Art Trog. In der Umgebung der Durchführöffnung 67 sind Befestigungsmittel 68 vorgesehen, die dazu dienen können, den Schutzschirm 6 an dem Behälter zu befestigen. Beispielsweise kann eine Montageplatte 101 bis über sein Montageflansch vorgesehen sein, der an der Au-ßenseite des Behälters im Bereich der Abgabeöffnung 37 anzuordnen ist und mithilfe von Befestigungseinrichtungen, wie Schrauben, fest mit dem Befestigungsmittel 68 verbunden werden kann. Die Montageplatte 101 kann eine ringförmige Stärkung 103 aufweisen, die in die Abgabeöffnung 37 einzusetzen ist, um den Behälter im Bereich dessen Abgabeöffnung 37 abzuschirmen.

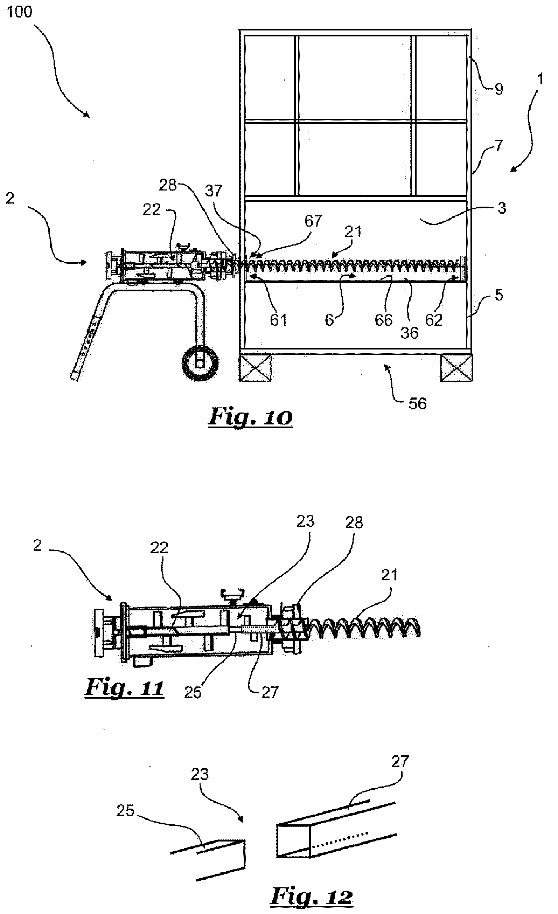

Fig. 10 zeigt ein erfindungsgemäßes Fördersystem 100. Das Fördersystem 100 umfasst eine Pumpvorrichtung 2 und einen Behälter für rieselfähiges Schüttgut, der gemäß der exemplarischen Abbildung durch das zuvor beschriebene Behältersystem 1 gebildet sein kann. Vorzugsweise ist die Pumpvorrichtung 2 ausgeführt wie in EP 1 688 176 B1 oder EP 1 445 490 B1 beschrieben, die durch Bezugnahme vollumfänglich in die vorliegende Offenbarung mit einbezogen sind, wobei klar sei, dass der darin beschriebene Lagerbehälter durch einen Behälter oder ein Behältersystem 1 wie oben beschrieben realisiert sein kann. Insbesondere kann der Lagerbehälter realisiert sein als ein Behälter in Form des in dem miteinbezogenen Dokument beschriebenen Einwegcontainers. In den Behälter kann ein Schutzschirm 6 eingesetzt sein, der insbesondere wie zuvor beschrieben ausgeführt sein kann. Die Pumpvorrichtung 2 ist dazu ausgelegt und eingerichtet, das rieselfähige Füllgut aus dem Inneren des Behälters hinaus zu fördern. Die Pumpvorrichtung 2 kann wie hier dargestellt mit einer Förderwelle 21 ausgestattet sein. Zum Fördern von Füllgut aus dem Behälter hinaus kann die Förderwelle 21 der Pumpvorrichtung 2 in den Innenbehälter 3 eingeführt werden. Vorzugsweise sind der Innenbehälter 3 und die Förderwelle 21 derart aufeinander abgestimmt, dass die Förderwelle 21 wenigstens so lang ist, wie die Sammelrinne 36 des Behälters. Im Bereich der Sammelrinne 36 kann der Boden 35 des Behälters durch den Schutzschirm 6 abgeschirmt werden vor Scherkräften, die beim Betrieb der Pumpe 2 auftreten. Besonders leichte und kostengünstige Behältermaterialien, wie beispielsweise Pappe oder HDPE, könnten durch Scherkräfte beschädigt werden. Der Schutzschirm 6 nimmt die Scherkräfte auf.

Die Pumpe 2 weist ein Verankerungsmittel 28 auf, dass der Montageplatte 101 und/oder einem Befestigungsmittel 68 verbunden werden kann, um die Pumpe 2 an dem Behälter und/oder Schutzschirm 6 zu befestigen.

Die Pumpe 2 kann als kombinierte Misch- und Förderpumpe realisiert sein. Zusätzlich zu der Förderwelle 21 umfasst die Pumpe 2 eine Mischwelle oder Rührwelle 22, die dazu ausgelegt ist, das rieselfähige Füllgut gegebenenfalls mit einer Flüssigkeit wie Wasser, zu vermengen. Gemäß einer Ausführungsform können Förderwelle 21 und Rührwelle 22 mit einander verbunden sein, beispielsweise mit einer Bajonettverbindung, wie sie etwa in EP 1 688 176 B1 oder EP 1 445 490 B1 beschrieben ist. Alternativ ist es denkbar, dass eine Wellenkupplung 23 die Förderwelle 21 mit Rührwelle 22 verbindet. Die Wellenkupplung 23 gebildet sein, wie in Fig. 12 dargestellt, durch einerseits einen Steckabschnitt 25 und andererseits einen Aufnahmeabschnitt 27. Der Steckabschnitt 25 und der Aufnahmeabschnitt 27 sind unrund und formkomplementär zu einander ausgeführt. Gemäß der hier abgebildeten Ausführungsform ist der Steckabschnitt 25 durch einen Vierkantstab gebildet und die Steckaufnahme 27 durch ein zu dem Vierkantstab formkomplementäres Vierkantrohr. Wie in Fig. 11 abgebildet, kann der Steckabschnitt 25 fest mit der Rührwelle 22 und die Steckaufnahme 27 fest mit der Förderwelle 21 verbunden (oder einstückig mit selbiger gebildet) sein.

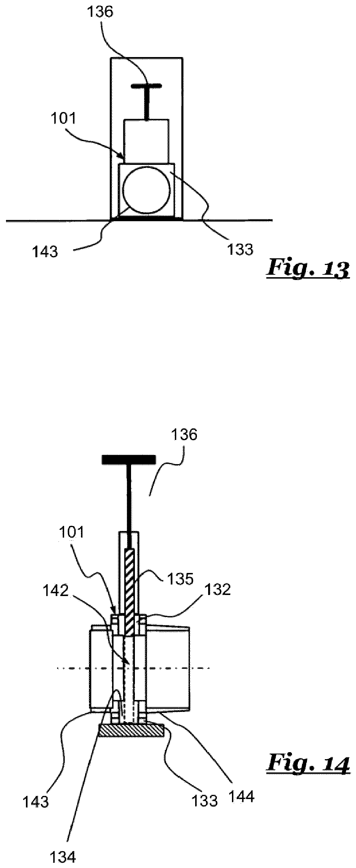

Wie in den Figuren 13 und 14 dargestellt, kann der Behälter, insbesondere der Innenbehälter 3 des Behältersystems 1, die Sockelanordnung 5 des Behältersystems 1, oder der Montageflansch 101 optional ausgestattet sein mit einem Absperrschieber 135, der zwischen einer Freigabestellung, in der Füllgut aus dem Behälter durch die Abgabeöffnung 37 abgebbar ist, und einer Sperrstellung verlagerbar ist, in welcher der Absperrschieber 135 eine Abgabe des Füllguts blockiert. Der Verständlichkeit halber wird im Folgenden auf einen im Montageflansch 101 integrierten Absperrschieber Bezug genommen, wobei klar sei, dass die folgenden Erläuterungen auch für die anderen Optionen gelten soll.

Der Absperrschieber 135 kann in einer Gleitlagerung 132 zum translatorischen Führen des Absperrschiebers bei der Verlagerung zwischen der Freigabe- und der Sperrstellung gehalten sein. Der Absperrschieber 135 kann dazu ausgebildet sein, einen Durchgang 142 durch die Abgabeöffnung 37, die Durchführöffnung 67 und/oder entsprechend der lichten Weite der ringförmigen Verstärkung 103 in der Freigabestellung insbesondere vollständig freizugeben. In der Sperrstellung verschließt der Absperrschieber 135 den Durchgang 142 füllgutdicht. In der Sperrstellung kann der Absperrschieber 135 mit einem Ventilsitz 134 in einen abdichten den Eingriff gelangen. Der Ventilsitz 134 ist relativ zu dem Sperrschieber 135 derart bemessen, dass die durchgangsseitigen Ventilsitzränder an dem Absperrschieber vorhandenes Füllgut beim Einnehmen der Sperrstellung in Durchgangsrichtung abstreifen. Der Montageflansch 101 kann bei dieser Ausführungsform als Einsetzlager bezeichnet sein. Das Einsetzlager 101 umfasst ein druckfestes Lagergehäuse 133 mit einem axialen Durchgang 142. Der Durchgang 142 erstreckt sich durch das Lagergehäuse 133 von einem an dem Lagergehäuse 133 angeordneten Einsetzstutzen 144, der die ringförmige Verstärkung 103 realisieren kann, zu einem außenseitigen Anschlussstutzen 143. Der Anschlussstutzen 143 kann zur Anbindung an eine Pumpe 2 ausgelegt und eingerichtet sein. Ein Handbetätigungsteil 136 kann zur Betätigung des Absperrschiebers 135 vorgesehen sein.

Fig. 15 zeigt eine Innenansicht eines erfindungsgemäßen Schutzschirms 6. Der Schutzschirm umfasst zwei einander gegenüberliegende Flügel 65, die einen V-förmigen Querschnitt zum Einsetzen in eine Sammelrinne am Boden 35 des Behälters bilden. Der der Behälter ist aus HDPE gebildet und der Schutzschirm 6 aus Metall. Der Schutzschirm 6 umfasst eine Fußplatte 62, die an einem Ende des Schutzschirms 6 zwischen den gegenüberliegenden Flügeln 65 angeordnet ist. Gegenüberliegend zur Fußplatte 62 ist eine Stirnplatte 61 angeordnet. Die Stirnplatte 61 ist zwischen den gegenüberliegenden Flügeln 65 angeordnet. Die Flügel 60 sind mit der Stirnplatte 61 und/oder der Fußplatte 62 fest verbunden, beispielsweise durch Schweißen. Die Stirnplatte 61 des Schutzschirms 6 weist eine kreisrunde Durchführöffnung 67 auf. Die Stirnplatte 61 und/oder die Fußplatte 62 können sich in Axialrichtung in Bezug auf die Förderwelle 21 an den Seitenwänden 33 des Behälters abstützen.

Nahe der Fußplatte 62 ist eine Wellenhalterung 26 vorgesehen. Mit der Wellenlagerung 26 ist die Förderwelle 21 am Schutzschirm 6 gehalten. Die Wellenlagerung 26 gestattet eine Drehbewegung der Förderwelle 21 um die eigene Drehachse. Eine axiale Bewegung der Förderwelle 21 in Richtung (parallel) zur Drehachse durch die Durchführöffnung 67 hinaus aus dem Schutzschirm 6 ist durch die Wellenlagerung 26 verhindert. Die Wellenlagerung 26 einerseits und andererseits die Fußplatte 62 oder die Stirnplatte 61 können als Axialanschläge für die Förderwelle 21 gebildet sein, welche eine Axialbeweglichkeit der Förderwelle 21 begrenzen.

Die hier abgebildete Förderwelle 21 ist gebildet durch eine Förderschnecke. Am Außenumfang der Förderschnecke sind mehrere radial vorstehende Rippen 20 angebracht, die sich entlang von zwei benachbarten Schneckengängen erstrecken und an den Außenkanten der Förderschnecke befestigt sind. Während einer Drehbewegung der Förderschnecke 21 kollidieren die entlang des Außenumfangs der Förderschnecke verteilt angeordneten Rippen 20 mit den einander gegenüberliegenden Flügeln 65 des Schutzschirms 6, sodass eine Rüttelbewegung verursacht wird.

Die Figuren 16a bis 16d zeigen ein Fördersystem 100 mit einem Behälter und einer Pumpvorrichtung 2. Die Pumpvorrichtung 2 umfasst ein Verankerungsmittel 28 zum Befestigen der Pumpvorrichtung am Behälter. Die Befestigung kann, wie abgebildet, beispielsweise mittels einer Montageplatte 101 erfolgen. Die Montageplatte 101 kann beispielsweise mit Befestigungsmitteln 68 eines Schutzschirms 6 fest verbunden sein. Die Montageplatte kann eine Aufnahme 128 zum Aufnehmen des Verankerungsmittels 28 umfassen. Beispielsweise kann das Verankerungsmittel 28 als Stellexzenter und die Aufnahme als zu dem Stellexzenter korrespondierende Exzenteraufnahme 128 realisiert sein.

Die Stellexzenteraufnahme 128 ist als radiale Umfangsnut am Außenumfang an dem Anschlussstutzen 143 gebildet. Das Verankerungsmittel 28 setzt sich zusammen aus einer Muffe einer Pumpvorrichtung 2, die über den Anschlussstutzen 143 stülpbar ist. Der Innendurchmesser der Muffe ist im Wesentlichen so groß wie der Außenumfang des Anschlussstutzens 143. Aus dem Anschlussstutzen 143 ragt koaxial der förderwellenseitige Teil der Wellenkupplung 23 hinaus. Aus der Muffe ragt koaxial der antriebsseitige Teil der Wellenkupplung 23 hinaus.

Wie in Fig. 16d abgebildet, kann der Steckabschnitt 25 der Wellenkupplung 23 vom Aufnahmeabschnitt 27 gelöst werden. Der Steckabschnitt 25 und der Aufnahmeabschnitt 27 sind dazu ausgelegt, in Axialrichtung in einander verschieblich, insbesondere gleitbeweglich, zu sein. Zur Übertragung einer Drehbewegung sind die Abschnitte 25, 27 der Wellenkupplung 23 unrund in Bezug auf die Drehachse der Förderwelle 21.

Für eine einfache Montage des Förderwellenabschnitts 21 an einem antriebsseitigen Wellenabschnitt 22 stehen der Steckabschnitt 25 und/oder der Aufnahmeabschnitt 27 in Axialrichtung von dem jeweiligen axialen Ende einerseits der Muffe und/oder andererseits dem Anschlussstutzen 143 hervor. Wie in Fig. 16c zu erkennen, kann die Wellenkupplung 23 auf diese Weise einfach montiert und miteinander verbunden werden, bevor die Verankerung 28 in Kontakt mit dem Behälter gebracht wird.

Die Fig. 16a zeigt einen Befestigungszustand, in dem die Pumpenvorrichtung 2 fest mit dem Behälter verbunden ist. In dem in Fig. 16b gezeigten Freigabezustand ist die Pumpenvorrichtung 2 vom Behälter lösbar. In Fig. 16b stehen die Exzenterhebel seitlich von der Muffe ab und der Exzentervorsprung steht ab. In Fig. 16a sind die Exzenterhebel an die Muffe angelegt, sodass der jeweilige Exzentervorsprung radial nach innen gewandt ist und in die Exzenteraufnahme eingreift. Der Behälter ist durch das Verankerungsmittel form- und kraftschlüssig mit der Pumpenvorrichtung 2 verbunden.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Behältersystem
- 2: Pumpvorrichtung
- 3: Innenbehälter
- 5: Sockelanordnung
- 6: Schutzschirm
- 7: erster Aufsatz
- 8: Steckadapter
- 9: zweiter Aufsatz
- 20: Rippe
- 21: Förderwelle
- 22: Rührwelle
- 23: Wellenkupplung
- 25: Steckabschnitt
- 26: Wellenlagerung
- 27: Aufnahmeabschnitt
- 28: Verankerungsmittel
- 31: Basisbehälter
- 32: obere Randkante
- 33: Seitenwand
- 34: Schulter
- 35: Boden
- 36: Sammelrinne
- 37: Abgabeöffnung
- 38: Bodenfläche
- 40: untere Randkante
- 41: Aufsteckbehälter
- 42: obere Randkante
- 43: Aufsteckbehälter-Seitenwand
- 44: Schulter
- 45: Abdeckung
- 46: Zuführöffnung
- 47: Kante
- 51: Stützaufnahme
- 53: unteres Ende
- 54, 74, 94: Gitter- und/oder Fachwerkgerüst
- 55: Öffnung
- 56: Tragstruktur
- 58, 78: Steckabsatz
- 59, 79, 89: Riegelaufnahme
- 61: Stirnplatte
- 62: Fußplatte
- 63: Rüttelsieb
- 64: Lagerbleche
- 65: Flügel
- 66: Barrieresteg
- 67: Durchführöffnung
- 68: Befestigungsmittel
- 69: Haltestruktur
- 71: erster Innenraum
- 88: Befestigungsriegel
- 91: zweiter Innenraum
- 100: Fördersystem
- 101: Montageplatte
- 103: ringförmige Verstärkung
- 132: Gleitlagerung
- 133: Lagergehäuse
- 135: Absperrschieber
- 128: Exzenteraufnahme
- 136: Handbetätigungsteil
- 142: Durchgang
- 143: Anschlussstutzen
- 144: Einsetzstutzen
- h5: Sockelhöhe
- h7: erste Aufsatzhöhe
- h9: zweite Aufsatzhöhe

## Patentansprüche

1. Behältersystem (1) für ein rieselfähiges, insbesondere pulverförmiges, Füllgut, wie ein Trockenmörtel für eine Klebe- und/oder Armierungsmasse, umfassend:
einen, insbesondere füllgutdichten, Innenbehälter (3), der zum Aufnehmen des Füllguts ausgelegt und eingerichtet ist;
eine Sockelanordnung (5) mit einer konkaven, nach oben offenen Stützaufnahme (51), die zum Tragen des Innenbehälters (3) ausgelegt und eingerichtet ist, wobei in einem unteren Bereich, insbesondere am unteren Ende (53), der Stützaufnahme (51) eine Öffnung (55) angeordnet ist,
mindestens einen ersten Aufsatz (7), der, insbesondere lösbar, auf die Sockelanordnung (5) aufgesetzt oder aufsetzbar ist und einen Innenraum (71) aufweist, in den der Innenbehälter (3) eingesetzt oder einsetzbar ist.

2. Behältersystem (1) nach Anspruch 1, **gekennzeichnet durch** mindestens einen zweiten Aufsatz (9), der, insbesondere lösbar, auf den ersten Aufsatz (7) aufgesetzt oder aufsetzbar ist und einen zweiten Innenraum (91) aufweist, in den der Innenbehälter (3) einsetzbar ist.

3. Behältersystem (1) nach Anspruch 1 oder 2, wobei der erste Aufsatz (7), der zweite Aufsatz (9) und/oder die Sockelanordnung (5) ein Gitter- und/oder Fachwerkgerüst (54, 74, 94) aufweist, wobei das Gitter- und/oder Fachwerkgerüst Kunststoff oder Metall, wie Aluminium oder Stahl, umfasst oder daraus besteht.

4. Behältersystem (1) nach einem der vorstehenden Ansprüche, wobei der Innenbehälter (3) wenigstens einen Basisbehälter (31) mit wenigstens einer Seitenwand, insbesondere vier rechtwinklig zu einander angeordneten Seitenwänden (33), und wenigstens einem Boden (35), der eine konkave Sammelrinne (36) und eine am oder im Boden (35) angeordnete Abgabeöffnung (37) aufweist, insbesondere daraus besteht, wobei insbesondere der Innenbehälter (3) mindestens einen Aufsteckbehälter (41) umfasst, der wenigstens eine zu der wenigstens einen Seitenwand (33) des Basisbehälters (31) korrespondierende Aufsteckbehälter-Seitenwand (43) aufweist, insbesondere daraus besteht.

5. Behältersystem (1) nach Anspruch 4, wobei der Basisbehälter (31) sowie gegebenenfalls der Aufsteckbehälter (41) ein, vorzugsweise formstabiles, Kunststoffmaterial umfasst, insbesondere daraus besteht.

6. Behältersystem (1) nach einem der Ansprüche 3 bis 5, wobei der Basisbehälter (31) eine Aufnahmekapazität von wenigstens 1,0 m³, insbesondere wenigstens 1,3 m³, und/oder nicht mehr als 2,5 m³, insbesondere nicht mehr als 2 m³, aufweist, wobei gegebenenfalls der Aufsteckbehälter (41) eine Aufnahmekapazität von wenigstens 0,7 m³, insbesondere wenigstens 1,0 m³, und/oder nicht mehr als 1,3 m³,
insbesondere nicht mehr als 1,5 m³, aufweist;
und/oder
wobei die Sockelanordnung (5) eine, insbesondere EPAL-Paletten-Systemkompatible, Tragstruktur (56) umfasst, die dazu ausgelegt und eingerichtet ist, mit einem Hubwagen anhebbar zu sein.

7. Behältersystem (1) nach einem der vorstehenden Ansprüche, umfassend eine Abdeckung (45) für den Innenbehälter (3), insbesondere mit Zufuhröffnung (46).

8. Schutzschirm (6) zum Einsetzen in eine konkave Sammelrinne (36) an einem Boden (35) eines Behälters, wie ein Innenbehälter (3), für ein rieselfähiges, insbesondere pulverförmiges, Füllgut, wie ein Trockenmörtel für eine Klebe- und/oder Armierungsmasse, umfassend
eine Stirnplatte (61) mit einer Durchführöffnung (67), die zum Einbringen einer Förderwelle (21) einer Pumpvorrichtung (2) für das rieselfähige Füllgut in den
Behälter ausgelegt und eingerichtet ist;
mindestens ein von der Stirnplatte (61) hervorstehender Barrieresteg (66), der dazu ausgelegt und eingerichtet ist, die Sammelrinne (36) zumindest teilweise zu bedecken.

9. Schutzschirm (6) nach Anspruch 7 oder 8, **gekennzeichnet durch** ein mit dem Schutzschirm verbundenes oder verbindbares Rüttelsieb (63), wobei insbesondere das Rüttelsieb (63) eine Maschenweite von nicht mehr als 3 cm x 3 cm, insbesondere nicht mehr als 2 cm x 2 cm, aufweist, wobei insbesondere der mindestens eine Barrieresteg (66) eine Lagerstruktur, wie Lagerbleche (64), aufweist, die zum Halten des Rüttelsiebs (63) am Schutzschirm (6) ausgelegt und eingerichtet sind und/oder wobei das Rüttelsieb (63) fest mit dem Barrieresteg verbunden, insbesondere verschweißt, ist.

10. Schutzschirm (6) nach einem der Ansprüche 7 bis 9, **dadurch gekennzeichnet, dass** die Förderwelle (21) dazu ausgelegt und eingerichtet ist, lösbar mit der Pumpvorrichtung (2) verbunden oder verbindbar zu sein und mit einer Wellenlagerung (26) am Schutzschirm (6), gehalten ist, wobei insbesondere die Wellenlagerung (26) an dem Barrieresteg (66) gegenüber der Durchführöffnung (67) befestigt ist, wobei insbesondere
die Wellenlagerung (26) einen Axialanschlag umfasst, der eine Axialverlagerung der Förderwelle (21) durch die Durchführöffnung (67) aus dem Schutzschirm (6) verhindert.

11. Behälter für ein rieselfähiges, insbesondere pulverförmiges, Füllgut, wie ein Trockenmörtel für eine Klebe- und/oder Armierungsmasse, insbesondere nach einem der Ansprüche 1 bis 6, aufweisend einen Boden (35) mit einer konkaven Sammelrinne (36), und einen in den Behälter eingesetzten Schutzschirm (6) nach einem der Ansprüche 7 bis 10, **dadurch gekennzeichnet, dass** der Schutzschirm (6) zumindest abschnittsweise formkomplementär an den Boden (35), insbesondere die Sammelrinne (36), des Behälters angepasst ist.

12. Behälter nach Anspruch 11, **dadurch gekennzeichnet, dass** der Behälter eine Abgabeöffnung (37) aufweist, die zu der Durchführöffnung (67) korrespondiert; und/oder
dass der Behälter wenigstens eine Montageplatte (101), insbesondere mit einer in die Abgabeöffnung (37) einsetzbare, ringförmige Verstärkung (103), und/oder eine mindestens eine Montageöffnung aufweist, die zu dem mindestens einen Befestigungsmittel (68) zum Verankern der Pumpvorrichtung (2) an dem Schutzschirm (6) korrespondiert.

13. Fördersystem (100) umfassend ein Behälter nach einem der Ansprüche 11 oder 12, und eine Pumpvorrichtung (2) für das rieselfähige Füllgut mit einer Förderwelle (21), **dadurch gekennzeichnet, dass** der Schutzschirm (6) zwischen der Förderwelle (21) und der Sammelrinne (36) angeordnet ist und/ oder
**dadurch gekennzeichnet, dass** die Abgabeöffnung (37) und die Durchführöffnung (67) zur Förderwelle (21) korrespondieren, insbesondere die Förderwelle (21) vorzugsweise koaxial, aufnehmen.

14. Fördersystem (100) nach Anspruch 13, **dadurch gekennzeichnet, dass** die Pumpvorrichtung (2) mindestens ein Verankerungsmittel (28) umfasst, das zum Befestigen der Pumpvorrichtung (2) an dem Behälter, insbesondere der Montageplatte (101) und/oder dem Schutzschirm (6), vorzugsweise dem mindestens einen Befestigungsmittel (68), ausgelegt und eingerichtet ist, wobei insbesondere das Verankerungsmittel (28) mindestens ein Stellmittel umfasst, wobei das Stellmittel verstellbar ist zwischen einem Befestigungszustand, in dem das Verankerungsmittel (28) die Pumpvorrichtung (2) an dem Behälter fixiert, und einem Freigabezustand, in dem die Pumpvorrichtung (2) von dem Behälter lösbar ist, und/oder wobei das Stellmittel einen Stellexzenter und der Behälter eine Stellexzenteraufnahme umfasst, die dazu ausgelegt sind, eine lösbare Form- und/oder Kraftschlussverbindung einzugehen.

15. Fördersystem (100) nach einem der Ansprüche 13 oder 14, **dadurch gekennzeichnet, dass** die Pumpvorrichtung (2) mehrere lösbar mit einander verbundene oder verbindbare Wellenabschnitte umfasst, wie einen Förderwellenabschnitt (21) und einen Rührwellenabschnitt (22), wobei die Wellenabschnitte dazu ausgelegt sind, mittels einer Wellenkupplung (23) mit einander verbunden oder verbindbar zu sein, wobei die Wellenkupplung (23) einen Steckabschnitt (25) und einen zu dem Steckabschnitt formkomplementären Aufnahmeabschnitt (27) umfasst, wobei die Wellenkupplung (23) einen unrunden, insbesondere polygonalen, vorzugsweise vierkant-, Querschnitt aufweist.

16. Fördersystem nach Anspruch 15, **dadurch gekennzeichnet, dass** der Förderwellenabschnitt (21) eine Förderschnecke umfasst, wobei insbesondere zumindest abschnittsweise am Außenumfang der Förderschnecke radiale Vorsprünge angeordnet sind, insbesondere Rippen, die sich, vorzugsweise parallel, in Axialrichtung der Drehachse des Förderwellenabschnitts, erstrecken, vorzugsweise über mindestens einen Schneckengang.

17. Fördersystem (100), insbesondere nach einem der Ansprüche 13 bis 16, für einen rieselfähiges, insbesondere pulverförmiges, Füllgut, wie ein Trockenmörtel für eine Klebe- und/oder Armierungsmasse, umfassend ein Behältersystem (1) nach einem der Ansprüche 1 bis 6, und eine Fördervorrichtung, wie eine Pumpvorrichtung (2), zum Herausfördern des Füllguts aus dem Innenbehälter (3).

18. Verwendung eines Behältersystems (1) nach einem der Ansprüche 1 bis 7, eines Schutzschirms nach einem der Ansprüche 8 bis 10, eines Behälters nach Anspruch 11 oder 12 oder eines Fördersystems nach einem der Ansprüche 13 bis 17 zum Abgeben eines rieselfähigen, insbesondere pulverförmigen, Füllguts, wie ein Trockenmörtel für eine Klebe- und/oder Armierungsmasse.
